# EUROPÄISCHE PATENTSCHRIFT

(11) **EP 2 204 995 B1**
(45) Veröffentlichungstag und Bekanntmachung des Hinweises auf die Patenterteilung: **27.07.2016**
(21) Anmeldenummer: 08106038.6
(22) Anmeldetag: 30.12.2008
(51) Int. Cl.: H04N 21/231, H04N 21/2343, H04N 21/258, H04N 21/41, H04N 21/414, H04N 21/4147, H04N 21/433, H04N 21/436, H04N 21/4402, H04N 21/6587

(54) **Verfahren und Vorrichtung zum geräteunabhängigen Zugriff auf Multimediainhalte sowie die Vorrichtung umfassendes System**
Method and device for access to multimedia content independent of device and system comprising the device
Procédé et dispositif destinés à l'accès indépendant des appareils à des contenus multimédias et système comprenant ledit dispositif

(43) Veröffentlichungstag der Anmeldung: 07.07.2010
(73) Patentinhaber: Nokia Solutions and Networks Oy, 02610 Espoo (FI)
(72) Erfinder: Granzer, Hermann, 82343, Pöcking (DE); Meckel, Joachim, 85579, Unterbiberg (DE)
(74) Vertreter: Borgström, Markus

(56) Entgegenhaltungen:
- EP-A2- 1 954 048
- WO-A2-2006/101635
- US-A1- 2005 252 959
- US-B1- 6 754 907

## Beschreibung

Die Erfindung betrifft ein Verfahren und eine Vorrichtung zum geräteunabhängigen Zugriff auf Multimediainhalte sowie ein die Vorrichtung umfassendes System.

Aus der Veröffentlichung US 2005/252959 A1 (GAUMOND MICHAEL T [US] ET AL, 17.November 2005 (2005-11-17)) sind ein System und ein Verfahren bekannt zum Verwalten von Inhalt zwischen verschiedenen Kundengeräten in diversen Domänen, wie Fahrzeug, Heim und Person. Das System und das Verfahren umfassen ein Empfangen einer Eingabe von einem Nutzer an dem ersten Kundengerät, um den Inhalt anzuhalten. Nach dem Empfangen der Eingabe bestimmt das erste Kundengerät, ob das erste Kundengerät mit einem drahtlosen Kommunikationssystem verbunden ist. Falls das erste Kundengerät mit dem drahtlosen Kommunikationssystem verbunden ist, sendet das erste Kundengerät eine Datennachricht an das zweite Kundengerät über ein Hostrechnersystem. In einem Ausführungsbeispiel wird das zweite Kundengerät dann den Inhalt in dem zweiten Kundengerät speichern nach dem Erhalt der Datennachricht, um dem Nutzer zu erlauben, die Wiedergabe des Inhalts auf dem zweiten Kundengerät wiederaufzunehmen.

Aus der Veröffentlichung WO 2006/101635 A2 (MOTOROLA INC [US]; ISAAC EMAD S [US]; D AVELLO ROBERT F [US], 28. September 2006 (2006-09-28)) sind ein System und ein Verfahren bekannt zum Verwalten von Inhalt zwischen verschiedenen Kundengeräten in diversen Domänen, wie Fahrzeug, Heim und Person, welche eine Nutzerschnittstelle, ein drahtloses Sende-Empfangs-Gerät und eine Reglereinheit umfassen. Die Nutzerschnittstelle empfängt eine Eingabe von einem Nutzer, um die Präsentation des Inhalts von einem ersten Kundengerät zu einem zweiten Kundengerät zu ändern. Das drahtlose Sende-Empfangs-Gerät überträgt die Eingabe des Nutzers drahtlos über ein Kommunikationssystem. Die Reglereinheit bestimmt reagierend auf die Eingabe von dem Nutzer ein Inhaltsformat für das zweite Gerät.

Fernseh- und Rundfunkprogramme werden zunehmend über eine Mehrzahl von Verteilwegen angeboten. So findet sich die Bereitstellung derartiger Programmangebote über terrestrisches Antennensignal, aber auch über Kabelnetze, Satellitensysteme, das Internet und Kommunikationsnetze, wie insbesondere Mobilfunknetze. Über diese neuen Verteilwege werden allgemeiner Multimediadienste unterstützt, die neben Fernseh- und Audioprogrammen, beispielsweise auch Video auf Anforderung, Audio auf Anforderung, Spiele, Texte, Bilder, Daten und Internetzugriff umfassen können.

So erfolgt beispielsweise bei IPTV (Internet Protokoll Fernsehen) die digitale Übertragung von breitbandigen Anwendungen, wie Fernsehprogrammen und Filmen, über ein digitales Datennetz. Hierzu wird das auch dem Internet zugrunde liegende Internet Protocol (IP) verwendet. Typischerweise wird beim IPTV von einem Telekommunikations-Anbieter einem bestimmten Nutzerkreis, den Abonnenten oder Teilnehmern, ein Programmangebot mit definierter Qualität über ein Breitbandnetz zur Verfügung stellt. IPTV benötigt i. a. aus technischen Gründen ein geeignetes und vom IPTV Anbieter zugelassenes Endgerät beim Teilnehmer. Das Endgerät empfängt Datenströme über eine Internetanbindung, z.B. eine DSL basierte Anbindung, es teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere beispielsweise Set Top Boxen (STB), Fernsehgeräte (TV), Personal Computer (PC) und Mo-Mobilfunkgeräte zur Verfügung. Zur Bereitstellung der ein jeweiliges IPTV Angebot betreffenden Multimediadienste sind seitens des Anbieters u. a. Komponenten zur Steuerung, Lastverteilung und Zugangskontrolle, zur Einspeisung von Fernsehprogrammen (TV headend) in das Breitbandnetz, zur Bereitstellung von Video/Audio Inhalten auf Abruf (VoD Server), zur Aufzeichnung von Inhalten (PVRs), zur Übertragung per Streaming und/oder Download, sowie zur Verschlüsselung der zu übertragenden Inhalte vorhanden.

Neben auf einem Festnetz basierten IPTV Netzlösungen gibt es insbesondere für Mobilfunknetze geeignete Netzlösungen für Mobilfernsehen, die typischerweise zum Beispiel von Mobilfunknetzbetreibern angeboten werden. Derartige Lösungen benötigen anbieterseitig ähnliche Komponenten, wie bereits vorstehend erwähnt, verwenden jedoch bedingt durch andere Technologie abweichende Konzepte und Standards. Insbesondere sind beispielsweise die Kodierung der Nutzsignale und die Funktionalität der Endgeräte (z.B. Displaygröße, lokale Verarbeitungsleistung, lokaler Speicher, Übertragungsbandbreite) verschieden von den für ein Festnetz eingesetzten IPTV Lösungen.

Durch die Mehrzahl der Verteilwege und Netzlösungen wird es möglich, dass ein Nutzer oder Teilnehmer auf einen ihn interessierenden Inhalt, beispielsweise auf einen auf Anforderung bereitgestellten Spielfilm oder auf ein Fernsehprogramm, von zuhause, am Arbeitsplatz, bei Bekannten oder insbesondere von unterwegs zugreift. Hierzu kann sich der Nutzer oder Teilnehmer unterschiedlicher Endgeräte bedienen und/oder unterschiedliche Netzlösungen nutzen.

Unterbricht der Nutzer den Zugriff auf den Inhalt und möchte den Zugriff auf den Inhalt zu einer späteren Zeit fortsetzen, so benötigt er eine Möglichkeit, auf seine letzte Nutzung des Inhalts in einfacher Weise aufzusetzen. Dies kann beispielsweise dadurch erfolgen, dass ihm der letzte Musiktitel, welchen er vor einer Unterbrechung gehört hat, nach Beendigung der Unterbrechung angeboten oder gespielt wird. Ebenso kann die zuletzt aufgeschlagene Seite eines elektronisch zugreifbaren Buches oder einer Internet-Präsentation nach der Unterbrechung ausgegeben werden. Auch kann eine Fortsetzung eines auf Anforderung bereitgestellten Spielfilms oder eines Fernsehprogramms an der Stelle der Unterbrechung erwünscht sein oder erfolgen. Ferner kann der Nutzer oder Teilnehmer individuelle Informationen zur Erleichterung der Orientierung und/oder des Zugriffs definiert haben, über die der Nutzer oder Teilnehmer nach der Unterbrechung ebenfalls weiterhin verfügen möchte.

Hierbei ist es von Nachteil, dass mit einem Inhalt verknüpfte individuelle Informationen, insbesondere individuelle Zugriffsinformationen für den Inhalt, nicht über mehrere unterschiedliche Netzlösungen hinweg und in geräteunabhängiger Weise verfügbar sind.

Der Erfindung liegt daher die **Aufgabe** zugrunde sicherzustellen, dass eine geräteunabhängige Verfügbarkeit von mit einem Inhalt verknüpften individuellen Informationen effizient und zuverlässig erreicht wird.

Die Aufgabe wird hinsichtlich des Verfahrens durch die Maßnahmen des Patentanspruchs 1, hinsichtlich der Vorrichtung durch die Merkmale des Patentanspruchs 14 und hinsichtlich des Systems durch die Merkmale des Patentanspruchs 15 gelöst.

Weiterbildungen der Erfindung ergeben sich auch aus den abhängigen Ansprüchen.

Zur Lösung der Aufgabe wird ein Verfahren zum geräteunabhängigen Zugriff auf Multimediainhalte angegeben,
- bei dem eine Markierungsinformation von einem ersten Endgerät bereitgestellt wird,
   wobei die Markierungsinformation zumindest eine Markierung in einem Multimediainhalt umfasst,
- bei dem die Markierungsinformation gespeichert wird,
- bei dem eine Anforderung zum Zugriff auf den Multimediainhalt bereitgestellt wird, und
- bei dem eine Übertragungsinformation in Abhängigkeit von der Anforderung ermittelt wird zur Übertragung des Multimediainhalts ab der zumindest einen Markierung an ein zweites Endgerät.

Somit wird die Markierungsinformation, welche die zumindest eine Markierung in dem Multimediainhalt als individuelle Zugriffsinformation auf einen Multimediainhalt umfasst, von dem ersten Endgerät bereitgestellt. Bei Vorliegen und in Anhängigkeit einer Anforderung zum Zugriff auf den Multimediainhalt wird eine Übertragungsinformation zur Übertragung eines Teils des Multimediainhalts, welcher verknüpft ist mit der zumindest einen Markierung, an das zweite Endgerät automatisch ermittelt. Hierbei ist es vorteilhaft, dass die zumindest eine Markierung von dem ersten Endgerät festgelegt wird und für eine Übertragung des Multimediainhalts an das zweite Endgerät herangezogen oder genutzt wird, indem die Übertragungsinformation so ermittelt wird, dass eine Übertragung des Multimediainhalts ab der zumindest einen Markierung erreicht wird.

Weiterhin ist es vorteilhaft, dass die Übertragungsinformation im Hinblick auf das zweite Endgerät ermittelt wird, obwohl die Zugriffsinformation auf den Multimediainhalt von dem ersten Endgerät bereitgestellt wird, welches einer anderen Netzlösung angehören kann und andere Gräteeigenschaften besitzen kann als das zweite Endgerät. So kann das erste Endgerät insbesondere eine Set Top Box eines Festnetzfernsehens sein. Aufgrund der Anforderung erfolgt jedoch die Ermittlung einer Übertragungsinformation zur Übertragung des Multimediainhalts ab der zumindest einen Markierung für das zweite Endgerät, das beispielsweise ein mobiles Endgerät, insbesondere ein Handy oder mobiles Telefon, sein kann und damit eine Netzlösung für ein Mobilfunkfernsehen nutzen kann, die beispielsweise hinsichtlich Übertragungsbandbreite, unterstützter Auflösung, Verarbeitungsleistung eines Endgeräts und/oder Übertragungsstandards von der Festnetzfernsehlösung abweichen kann.

Der Multimediainhalt kann z.B. ein Fernsehprogramm, ein Video auf Anforderung, eine Hörfunksendung, ein Audio auf Anforderung, ein elektronisches Spiel oder ein elektronisches Buch sein. Ein Multimediainhalt kann ebenso beispielsweise einen auf Anforderung eines Teilnehmers abrufbaren multimedialen Inhalt, einen Spielfilm, einen Video Clip, eine Video-Botschaft, eine Sprachnachricht, eine Aufzeichnung eines Fernseh- oder Hörfunkprogramms, einen vollständigen oder teilweisen Mitschnitt eines Fernseh- oder Hörfunkprogramms, einen Audio-Inhalt, eine Internetseite, eine Walled Garden Seite, Bildmaterial, Tonmaterial, ein festes Bild, ein bewegtes Bild, ein Live Signal eines Fernseh- oder Hörfunkprogramms, eine Verknüpfung zu einem der vorstehenden Inhalte, eine beliebige Kombination der vorstehenden Inhalte oder eine beliebige Kombination der vorstehenden Inhalte mit weiteren Inhalten umfassen.

Das Verfahren kann beispielsweise in einem Server einer IPTV Lösung, einer auf terrestrische Antenne oder Satellitenantenne gestützten hybriden Fernsehlösung mit Rückkanal des Endgeräts zum Dienstanbieter, einer auf DSL oder Kabelanschluss gestützten Festnetzfernsehlösung oder einer Mobilfunkfernsehlösung zum Ablauf gelangen. Ebenso kann das Verfahren auf einem Netzübergangsknoten (Gateway) zwischen zwei der vorstehend genannten Fernsehlösungen, insbesondere beispielsweise auf einem Netzübergangsknoten zwischen einer IPTV Lösung des Festnetzes oder einer Mobilfunkfernsehlösung zum Ablauf gelangen. Auch kann das Verfahren in einer nur auf Endgeräte gestützten Fernsehlösung, z.B. einer peer-to-peer Fernsehlösung, zum Ablauf gelangen.

Eine Weiterbildung ist es, dass die Anforderung die zumindest eine Markierung in dem Multimediainhalt betrifft oder die Anforderung den Multimediainhalt ab der zumindest einen Markierung betrifft.

Hiermit kann die zumindest eine Markierung, welche auf den Multimediainhalt bezogen ist, angefordert werden. Dies ist beispielsweise vorteilhaft, wenn die Übertragung des Multimediainhalts ab der zumindest einen Markierung noch von weiteren Zuständen oder Ereignissen abhängig ist. So kann beispielsweise eine Gebühreninformation, eine Netzlast, eine Überlast in einem Netz oder einem Netzknoten, eine Nutzerinformation hinsichtlich eines Ratings oder einer Bewertung des Multimediainhalts, eine Information hinsichtlich der zu erwartenden Länge oder der physikalischen Größe des Multimediainhalts ab der zumindest einen Markierung, eine Zugriffsperre für das zweite Endgerät oder den Teilnehmer, der das zweite Endgerät nutzt, eine Entscheidung gegen eine Übertragung des Multimediainhalts ab der zumindest einen Markierung verursachen.

Soll das Ausspielen des Multimediainhalts ab der zumindest einen Markierung unbedingt erfolgen soll, dann kann die Anforderung den Multimediainhalt ab der zumindest einen Markierung unmittelbar betreffen. Dies ist vorteilhaft hinsichtlich einer Reduktion der Anzahl der notwendigen Nachrichten sowie einer damit verbundenen geringeren Verarbeitungsleistung in Netzknoten und einem anfordernden Gerät sowie einer geringeren Netzbelastung.

Eine andere Weiterbildung ist es, dass die Übertragungsinformation eine zweite Kodierung für das zweite Endgerät umfasst, welche verschieden ist von einer ersten Kodierung für das erste Endgerät.

Erste und zweite Kodierung können hierbei für das erste bzw. das zweite Endgerät geeignete oder ausschließlich verwendbare Kodierungen des Audioanteils und/oder des Videoanteils des Multimediainhalts sein. Mögliche Kodierungen können beispielsweise H.261, MPEG-1 Video, H.262, MPEG-2, H.263, MPEG-4 Visual, MPEG-4 AVC, MPEG-4 SVC, AVS, VC-1, MP2, MP3, AAC, AC-3 Dolby Digital, WMA, MLP sein. Insbesondere können die Audio- und Videokodierungen in Festnetzfernsehlösungen (SDTV, HDTV) verschieden von den in Mobilfunkfernsehlösungen verwendeten Kodierungen sein. Die erste Kodierung kann sich hierbei von der zweiten Kodierung durch die verwendeten Kodierverfahren für den Audio- und/oder Video-Strom des Multimediainhalts unterscheiden. Auch wenn ein gleiches Kodierverfahren für das erste Endgerät und das zweite Endgerät verwendet wird, so kann sich die erste Kodierung von der zweiten Kodierung durch Verwendung unterschiedlicher Kodierungsparameter und / oder Einstellungen der Kodierungseinrichtung (Encoder) unterscheiden. Solche Einstellungen können beispielsweise eine konstante Bitrate, eine variable Bitrate, eine Spitzenbitrate, ein Fehlerkorrekturverfahren, eine Auflösung des Video-Anteils des Multimediainhalts, eine Verschlüsselungsinformation oder ein Verschlüsselungsverfahren betreffen. Die Übertragungsinformation wird so ermittelt, dass Informationen, welche die zweite Kodierung bestimmen, enthalten sind. Damit ist es vorteilhaft möglich, den Multimediainhalt ab der zumindest einen Markierung in der für das zweite Endgerät geeigneten Kodierung anzufordern.

Die Übertragungsinformation kann ebenfalls eine Adressinformation, insbesondere eine Frequenzlage, eine Multicast oder Unicast Adresse zur Bereitstellung des Multimediainhalts in der zweiten Kodierung, eine Adresse des zweiten Endgeräts, eine Identifikation des Multimediainhalts, eine Zugangskontroll- oder Rating -Information hinsichtlich des zweiten Endgeräts und weitere Übertragungsparameter umfassen.

Auch ist es eine Weiterbildung, dass die Übertragungsinformation und die zumindest eine Markierung einem Server zur Bereitstellung des Multimediainhalts ab der zumindest einen Markierung und gemäß der zweiten Kodierung zur Verfügung gestellt werden.

Typischerweise ist der Server zur Bereitstellung des Multimediainhalts ab der zumindest einen Markierung ein Server, der den Multimediainhalt in einem Speicher hinterlegt hat. Dadurch dass dem Server die Übertragungsinformation und die Markierung bereitgestellt werden, kann er den hinterlegten Multimediainhalt ab der zumindest einen Markierung bereitstellen. Entspricht das im Speicher des Servers hinterlegte Format bereits der zweiten Kodierung, welche für das zweite Endgerät geeignet ist, so kann zur Bereitstellung das bloße Auslesen des gespeicherten Inhalts erfolgen. Die zumindest eine Markierung wird hierbei von dem Server zur Bestimmung des Speichers herangezogen, von dem beginnend der Multimediainhalt ausgespielt werden soll. So kann beispielsweise eine Suche nach einem Bild, einem Frame, einer Tonsequenz, einer Stimme, einem Szenenwechsel, einer relativen Zeit durchgeführt werden, um die der zumindest einen Markierung entsprechende Stelle in dem Multimediainhalt aufzufinden.

Ist der relevante Teil des Multimediainhalts nicht bereits in der zweiten Kodierung im Speicher des Servers hinterlegt, so kann die zweite Kodierung durch Umkodierung mitlaufend mit dem Ausspielen oder diesem vorauseilend dynamisch erzeugt werden. Die Umkodierung kann hierbei eine Funktion des Servers sein oder von einer weiteren Transkodiereinrichtung vorgenommen werden.

Existieren mehrere Server, die den Multimediainhalt in ihrem Speicher hinterlegt haben, dann kann die Übertragungsinformation vorzugsweise von dem Server bereitgestellt werden, welcher die Kodierung bereits gemäß der zweiten Kennung in seinem Speicher hinterlegt hat. Ebenso kann eine Auswahl des Servers aufgrund geographischer Aspekte, beispielsweise einer Entfernung zu dem zweiten Endgerät, aufgrund einer Netzbelastung, aufgrund einer Serverauslastung, auf Grund einer Auslastung eines Übertragungsweges im Netz erfolgen. Dies hat den Vorteil einer günstigen Auslastung des Servers bzw. der Server sowie einer günstigen Auslastung von Netzkomponenten, die zur Bereitstellung des Multimediainhalts ab der zumindest einen Markierung benötigt werden.

Die Bereitstellung des Multimediainhalts ab der zumindest einen Markierung für das zweite Endgerät kann mittels einer Punkt-zu-Punkt oder Punkt-zu-Mehrpunkt Übertragung erfolgen. Insbesondere kann die Bereitstellung des Multimediainhalts ab der zumindest einen Markierung via Unicast, Multicast oder Broadcast erfolgen. Erfolgt die Bereitstellung über Multicast, Broadcast, eine Frequenzlage oder ein zu bestimmendes Übertragungsverfahren, dann kann zusätzlich auch eine Bereitstellung einer Adressinformation und / oder einer Bereitstellungsinformation für das zweite Endgerät erfolgen, damit dieses auch auf den bereitgestellten Multimediainhalt ab der zumindest einen Markierung zugreifen kann.

Eine weitere Weiterbildung ist es, dass die zumindest eine Markierung einem ersten PVR Server zur Verfügung gestellt wird zur Aufzeichnung des Multimediainhalts ab der zumindest einen Markierung in der ersten Kodierung.

Damit ist es möglich, dass ein über Broadcast oder Multicast verbreiteter Multimediainhalt, insbesondere beispielsweise eine Live-Sendung, ab der zumindest einen Markierung in der ersten Kodierung, welche für das erste Endgerät geeignet ist, von dem ersten PVR Server aufgezeichnet wird. Dies hat den Vorteil, dass ein Nutzer auch über das erste Endgerät auf den Multimediainhalt ab der zumindest einen Markierung zugreifen kann unabhängig und zusätzlich zu dem zweiten Endgerät. Durch Aufzeichnung in der ersten Kodierung ergibt sich der weitere Vorteil, dass keine Umkodierung von der zweiten Kodierung in die erste Kodierung erforderlich wird für eine Bereitstellung des Multimediainhalts ab der zumindest einen Markierung für das erste Endgerät.

Ebenso ist es eine Weiterbildung, dass der Server ein VoD Server und/oder ein zweiter PVR Server ist.

Dies ist vorteilhaft im Hinblick darauf, dass sowohl ein auf Abruf individuell bereitgestellter Multimediainhalt als auch ein als Fernsehprogramm bereitgestellter Multimediainhalt dem zweiten Endgerät zur Verfügung gestellt werden kann gemäß der zumindest einen Markierung. Ein auf Abruf verfügbarer Multimediainhalt wird vorzugsweise von einem VoD (Video on Demand) Server bereitgestellt. Soll ein Multimediainhalt ab der zumindest einen Markierung aufgezeichnet werden, so kann das vorzugsweise in dem zweiten PVR (Personal Video Recorder) Server erfolgen. Der zweite PVR Server kann ein netzzentrales Aufzeichnungsgerät sein, aber auch eine lokale Funktion des zweiten Endgeräts. Auch kann der zweite PVR Server in dem Zusammenwirken eines netzzentralen Geräts und des zweiten Endgeräts realisiert sein. Es ist ebenfalls vorteilhaft, wenn die Funktionen des VoD Servers und des zweiten PVR Servers in einem einzigen Gerät, z. B. einem netzzentralen Gerät verfügbar sind, da sich hierdurch beispielsweise für per Broadcast oder Multicast verbreitete Fernsehprogramme, die auf hinterlegtem Multimediainhalt beruhen, eine individuelle Aufzeichnung ab der zumindest einen Markierung reduzieren kann auf das Hinterlegen der zumindest einen Markierung.

Eine weitere Weiterbildung ist es, dass die zumindest eine Markierung dem zweiten PVR Server zur Verfügung gestellt wird zur Aufzeichnung des Multimediainhalts ab der zumindest einen Markierung in der zweiten Kodierung.

Damit ist es möglich, dass ein über Broadcast oder Multicast verbreiteter Multimediainhalt, insbesondere beispielsweise eine Live-Sendung, ab der zumindest einen Markierung in der zweiten Kodierung, welche für das zweite Endgerät geeignet ist, von dem zweiten PVR Server aufgezeichnet wird. Dies hat den Vorteil, dass ein Nutzer über das zweite Endgerät auf den Multimediainhalt ab der zumindest einen Markierung zugreifen kann unabhängig von dem ersten Endgerät. Durch eine Aufzeichnung in der zweiten Kodierung ergibt sich der weitere Vorteil, dass bei Erhalt der Anforderung keine Umkodierung in die zweite Kodierung erforderlich wird.

Ferner ist es eine Weiterbildung, dass die Markierungsinformation bereitgestellt wird zumindest für das zweite Endgerät.

Da die Markierungsinformation von dem ersten Endgerät bereitgestellt wird, kann hiermit insbesondere auch das zweite Endgerät die Markierungsinformation und damit die zumindest eine Markierung erfahren. Auch kann die Markierungsinformation beispielsweise weitere Markierungen enthalten, aus denen das zweite Endgerät eine Auswahl treffen kann. Dis ist vorteilhaft im Hinblick auf einen schnellen Überblick über die verfügbaren Markierungen innerhalb der Markierungsinformation sowie eine einfache Auswahl der zumindest einen Markierung aus der Markierungsinformation zur Bereitstellung des Multimediainhalts ab der zumindest einen Markierung.

Ebenso kann die Markierungsinformation Markierungen für eine Mehrzahl von Multimediainhalten umfassen. So kann das zweite Endgerät vorteilhaft zugleich eine Auswahl aus den zur Verfügung stehenden Multimediainhalten treffen.

Es ist eine zusätzliche Weiterbildung, dass die Markierungsinformation bereitgestellt wird aufgrund einer ersten Bedienereingabe an dem ersten Endgerät zum Setzen einer Markierung in dem Multimediainhalt oder zum Anhalten oder Beenden der Ausgabe des Multimediainhalts.

Damit ist der Vorteil verbunden, dass der Bediener, Nutzer oder Teilnehmer die Markierungsinformation individuell und explizit erzeugen kann. Dies kann beispielsweise erfolgen, wenn eine besonders spannende Szene eines Spielfilms beginnt oder eine wenig interessierende Szene endet, wodurch die zumindest eine Markierung in dem Multimediainhalt festgelegt werden kann. Ebenso kann die Markierungsinformation auch mehrere explizit erzeugte Markierungen in dem Multimediainhalt umfassen.

Beendet oder unterbricht der Bediener, Nutzer oder Teilnehmer die Ausgabe des Multimediainhalts, so entsteht hierdurch zumindest eine zusätzliche Markierung, welche in der Markierungsinformation enthalten ist. So entsteht vorteilhaft automatisch und ohne separate Bedieneingabe eine Markierungsinformation, die den Bediener, Nutzer oder Teilnehmer in die Lage versetzt, die Ausgabe des Multimediainhalts ab der zusätzlichen Markierung bereitgestellt zu bekommen zum einfachen Fortsetzen der Ausgabe des Multimediainhalts an der zusätzlichen Markierung.

Die erste Bedienereingabe kann insbesondere auch über eine Fernbedienung des ersten Endgeräts erfolgen.

Eine nächste Weiterbildung ist es, dass die Anforderung von dem ersten Endgerät oder von dem zweiten Endgerät bereitgestellt wird.

Damit ist der Vorteil verbunden, dass sowohl das erste wie auch das zweite Endgerät in der Lage sind, die Anforderung zum Zugriff auf den Multimediainhalt bereitzustellen. Hat ein Nutzer oder Teilnehmer den Multimediainhalt bis zu der zumindest einen Markierung von seinem mobilen Endgerät verfolgt und erreicht beispielsweise seine Wohnung, so kann er die Anforderung zum Zugriff auf den Multimediainhalt ab der zumindest einen Markierung über das zweite Endgerät bewirken, worauf die Ausgabe des Multimediainhalts ab der zumindest einen Markierung über das zweite Endgerät erfolgt. Ebenso kann der Nutzer oder Teilnehmer aber auch die Anforderung zum Zugriff auf den Multimediainhalt ab der zumindest einen Markierung über das erste Endgerät bewirken, worauf die Ausgabe des Multimediainhalts ab der zumindest einen Markierung über das zweite Endgerät erfolgt. Der Nutzer oder Teilnehmer muss also zur Fortsetzung der Ausgabe des Multimediainhalts über das zweite Endgerät, beispielsweise die Fernbedienung des zweiten Endgeräts nicht benutzen, sondern er kann das erste Endgerät benutzen, welches er möglicherweise ohnehin in Händen hält. Hiermit ergibt sich der zusätzliche Vorteil einfacherer Bedienbarkeit und fast unmittelbarer zeitlicher Fortsetzung der Ausgabe des Multimediainhalts über das zweite Endgerät.

Eine weitere Ausgestaltung ist es, dass die Anforderung bereitgestellt wird aufgrund einer zweiten Bedienereingabe an dem ersten Endgerät zum Starten oder Fortsetzen des Multimediainhalts oder aufgrund einer dritten Bedienereingabe an dem zweiten Endgerät zum Starten oder Fortsetzen des Multimediainhalts.

Hierbei ist es vorteilhaft, dass mittels der zweiten oder dritten Bedienereingabe sowohl auf explizit erzeugte Markierungen wie auch auf im Rahmen einer unterbrochenen Ausgabe auf implizit erzeugte Markierungen zugegriffen werden kann.

Die zweite Bedienereingabe kann auch per Fernbedienung des ersten Endgeräts erfolgen. Ebenso kann die dritte Bedienereingabe auch per Fernbedienung des zweiten Endgeräts erfolgen.

Ebenso ist es eine Weiterbildung, dass das erste Endgerät und das zweite Endgerät einander zugeordnet werden.

Eine solche Zuordnung kann prinzipiell durch einen Netzbetreiber oder Dienstanbieter beispielsweise eines Festnetzfernsehens oder eines Mobilfunkfernsehens auf administrativem Wege erfolgen. Sie kann aber auch durch einen Nutzer oder Teilnehmer selbst erfolgen, wenn hierzu notwendige Funktionalität in einer Netzlösung für ein Festnetzfernsehen oder ein Mobilfunkfernsehen vorhanden ist.

Dadurch dass das erste und das zweite Endgerät einander zugeordnet werden, kann sichergestellt werden, dass kein ungewollter oder unerlaubter Zugriff eines zweiten Endgeräts auf die individuelle und beispielsweise persönliche Markierungsinformation des ersten Endgeräts erfolgen kann. Ebenso kann vorteilhaft vermieden werden, dass es zu einer ungewollten oder unzulässigen Ausgabe des Multimediainhalts ab der zumindest einen Markierung auf ein beliebiges zweites Endgerät kommt. Die Zuordnung kann insbesondere dadurch erfolgen, dass das erste Endgerät und das zweite Endgerät einem einzigen Teilnehmer, einem einzigen Nutzer oder einer bestimmten Gruppe von Nutzern, zum Beispiel allen Mitgliedern einer Familie, zugeordnet werden.

Die Zuordnung kann auch durch Verwendung einer Kennung eines Nutzers erfolgen, welche vorzugsweise geschützt ist, z.B. mit Hilfe eines Passworts. Somit kann beispielweise ein beliebiges Mobilfunkgerät als zweites Endgerät einem ersten Endgerät, z. B. einer Set Top Box zugeordnet werden. Auch kann die Zuordnung erfolgen durch Eingabe einer ersten Kennung an dem ersten Endgerät und einer zweiten Kennung an dem zweiten Endgerät, wobei die erste Kennung und die zweite Kennung einander zugeordnet oder identisch sind. Insbesondere können erste und zweite Kennung einem einzigen Teilnehmer oder Nutzer zugeordnet sein.

Eine weitere Weiterbildung ist es, dass die zumindest eine Markierung einen Zeitwert umfasst.

Der Zeitwert kann eine relative Zeit zum Anfang oder zum Ende eines Fernsehprogramms oder eines Spielfilms sein. Ebenso kann der Zeitwert eine relative Zeit zu einer anderen Markierung des Multimediainhalts sein. Ebenso kann der Zeitwert eine absolute Zeit betreffen, wenn der Multimediainhalt beispielsweise durch eine permanent übertragende Überwachungskamera oder eine Landschaftskamera bestimmt wird.

Da in der ersten Kodierung und/oder in der zweiten Kodierung vorliegende Fernsehsendungen und Videos auf Anforderung im allgemeinen bereits relative Zeiten enthalten, ist es beispielsweise vorteilhaft einfach möglich, den Zeitwert einer Unterbrechung aus dem gerade vor der Ausgabe befindlichen Nutzdatenstrom zu gewinnen. Umgekehrt kann eine Fortsetzung der Ausgabe nach der Unterbrechung durch Ermittlung des Frames erfolgen, welcher dem so gewonnenen Zeitwert am besten entspricht.

Ausführungsbeispiele der Erfindung werden anhand der folgenden Figuren dargestellt:
- Fig. 1: zeigt ein Flussdiagramm wesentlicher Verfahrensschritte;
- Fig. 2: zeigt eine Bereitstellung einer Markierungsinformation und eine Anforderung eines Multimediainhalts ab einer Markierung;
- Fig. 3: zeigt eine Bereitstellung einer Markierungsinformation und eine Anforderung einer Markierung in einem Multimediainhalt;
- Fig. 4: zeigt eine Bereitstellung einer Markierungsinformation und eine Anforderung einer Markierung durch ein erstes Endgerät;
- Fig. 5: zeigt eine Bereitstellung einer Markierungsinformation für ein Fernsehprogramm durch ein erstes Endgerät und eine Anforderung des Fernsehprogramms gemäß der Markierungsinformation durch ein zweites Endgerät;
- Fig. 6: zeigt eine Bereitstellung einer Markierungsinformation für ein Fernsehprogramm durch ein erstes Endgerät, eine zentrale Steuerung zweier PVR Server und eine Anforderung des Fernsehprogramms gemäß der Markierungsinformation durch ein zweites Endgerät;
- Fig. 7: zeigt eine Mehrzahl von Multimediainhalten eines Teilnehmers;
- Fig. 8: zeigt eine Speicherung einer Markierungsinformation eines Teilnehmers;
- Fig. 9: zeigt eine Unterbrechung einer Bereitstellung eines Multimediainhalts in HDTV Qualität und eine Fortsetzung der Bereitstellung des Multimediainhalts in SDTV Qualität;
- Fig. 10: zeigt eine Fortsetzung einer Bereitstellung eines Multimediainhalts in HDTV Qualität und eine darauffolgende weitere Fortsetzung der Bereitstellung des Multimediainhalts in HDTV Qualität.

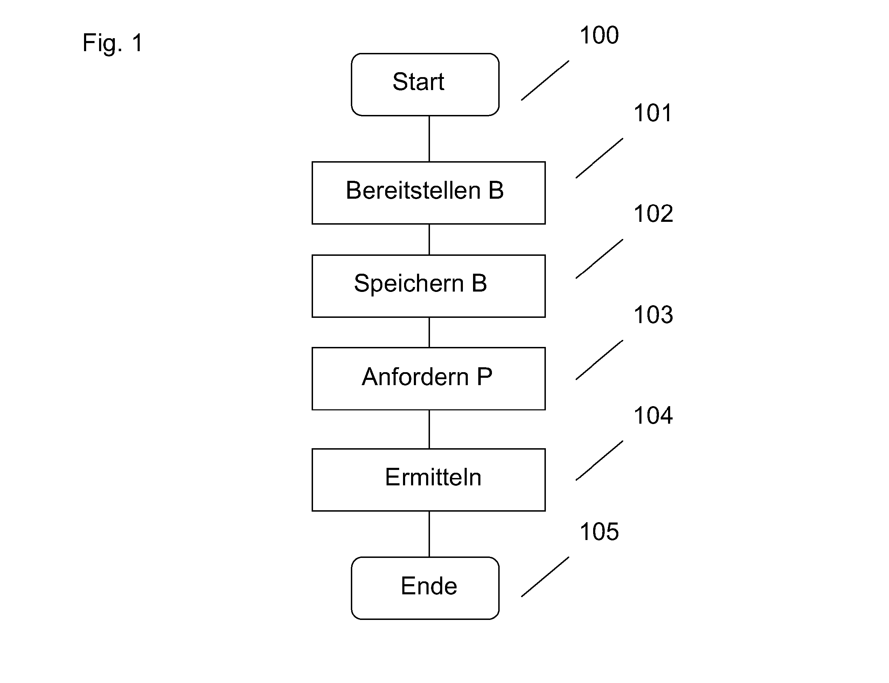

**Fig. 1** zeigt ein Flussdiagramm wesentlicher Verfahrensschritte. Nach einem Start (Schritt 100) wird zunächst eine Markierungsinformation B von einem ersten Endgerät bereitgestellt (Schritt 101). Die Markierungsinformation B umfasst zumindest eine Markierung in einem Multimediainhalt. Ebenso kann die Markierungsinformation beispielsweise eine Mehrzahl von Markierungen enthalten, die insbesondere Szenen oder Abschnitte oder allgemeiner Teile des Multimediainhalts betreffen können.

Die Markierungsinformation B wird sodann gespeichert (Schritt 102), womit sie für späteren Abruf und Auswertung verfügbar ist. Eine weitere Bereitstellung weiterer Markierungsinformation gemäß Schritt 101 und eine weitere Speicherung der weiteren Markierungsinformation gemäß Schritt 102 sind möglich. Hierbei kann die weitere Markierungsinformation die Markierungsinformation B ergänzen, modifizieren oder löschen.

Im Schritt 103 wird eine Anforderung P zum Zugriff auf den Multimediainhalt bereitgestellt. Hierbei kann die Anforderung P die Bereitstellung von Zugriffsinformation für den Multimediainhalt betreffen. Ebenso kann die Anforderung P auch die Bereitstellung des Multimediainhalts selbst betreffen. Die Anforderung wird typischerweise von einem zweiten Endgerät gestellt, welches Zugriff auf den Multimediainhalt haben möchte. Die Anforderung P kann ebenso beispielsweise von dem ersten Endgerät bereitgestellt werden, von einem weiteren Endgerät oder von einem Gerät einer Mobilfunkfernsehlösung oder einer Festnetzfernsehlösung.

Nach der Bereitstellung der Anforderung P erfolgt im Schritt 104 die Ermittlung einer Übertragungsinformation für die Übertragung des Multimediainhalts ab der zumindest einen Markierung. Die Ermittlung erfolgt in Abhängigkeit von der Anforderung P und im Hinblick auf die Bereitstellung des Multimediainhalts ab der zumindest einen Markierung für das zweite Endgerät. Die Übertragungsinformation kann insbesondere eine Kodierung, die für das zweite Endgerät geeignet ist, umfassen. Ferner kann eine Adresse des zweiten Endgeräts, eine Adresse eines Servers, welcher den Multimediainhalt ab der zumindest eine Markierung bereitstellen kann, und eine Identifikation des Multimediainhalts Teil der Übertragungsinformation sein.

Das Verfahren endet im Schritt 105.

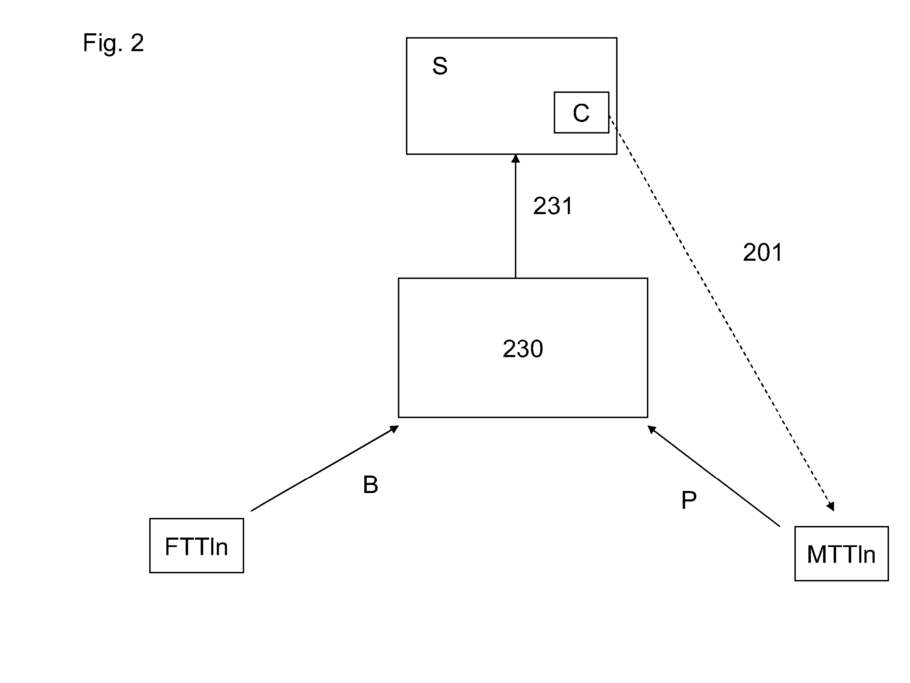

**Fig.2** zeigt eine Bereitstellung einer Markierungsinformation B und eine Anforderung P eines Multimediainhalts C ab einer Markierung. Ein erstes Endgerät FTTln einer Festnetzfernsehlösung, beispielsweise eine Set Top Box, welche über eine DSL Anbindung Zugriff auf einen Multimediainhalt C hat, stellt die Markierungsinformation B einem Gateway Server 230 zur Verfügung. Die Markierungsinformation B wird in Form einer Nachricht von dem ersten Endgerät FTTln an den Gateway Server 230 übertragen. Der Gateway Server 230 speichert die Markierungsinformation B lokal. Die Speicherung der Markierungsinformation B erfolgt vorzugsweise redundant aus Gründen der Ausfallsicherheit. Die Markierungsinformation B enthält beispielsweise eine einzige Markierung in dem Multimediainhalt C. Der Multimediainhalt C steht in einer für ein zweites Endgerät MTTln geeigneten Kodierung auf einem Server S bereit. Das zweite Endgerät MTTln ist beispielsweise ein mobiles Endgerät, welches den Zugriff hat auf ein Mobilfunkfernsehen. Nachdem die Markierungsinformation B auf dem Gateway Server 230 hinterlegt ist, generiert das zweite Endgerät MTTln eine Anforderung P zur Bereitstellung des Multimediainhalts C ab der zumindest einen Markierung. Die Anforderung P wird als Nachricht an den Gateway Server 230 übertragen. Dieser ermittelt daraufhin eine Übertragungsinformation. Dies geschieht durch Auswertung der Anforderung P. Hierdurch verschafft sich der Gateway Server 230 Kenntnis darüber, dass eine Bereitstellung des Multimediainhalts C für ein Mobilfunkgerät der Mobilfunknetzlösung gewünscht wird. Ggf. aus einer Mehrzahl von zur Verfügung stehenden Video On Demand Servern wählt der Gateway Server 230 den Server S aus, welcher den Multimediainhalt C in einer für das zweite Endgerät MTTln geeigneten Kodierung für die Mobilfunknetzlösung bereithält. Zusätzlich können geographische Abhängigkeiten, Lastzustände des Mobilfunknetzes oder der Video On Demand Server in eine Entscheidung zur Auswahl des Servers S einbezogen werden. Ist die Übertragungsinformation vollständig ermittelt, dann sendet der Gateway Server 230 dem Server S eine Nachricht 231, gemäß der von dem Server S eine Bereitstellung des Multimediainhalts C ab der zumindest einen Markierung für das zweite Endgerät MTTln verlangt wird. Die Nachricht kann beispielsweise die zumindest eine Markierung enthalten, eine Identifikation des Multimediainhalts C, eine Kodierung und Einstellparameter für einen Encoder, Übertragungsparameter und/oder eine Adresse des zweiten Endgeräts FTTln. Nach Erhalt der Nachricht 231 beginnt der Server S mit der Bereitstellung des Multimediainhalts C ab der zumindest einen Markierung für das zweite Endgerät. Dies kann beispielsweise im Unicast Verfahren und mittels Streaming erfolgen. Die Bereitstellung des Multimediainhalts C ab der zumindest einen Markierung ist durch eine Kommunikationsbeziehung 201 dargestellt.

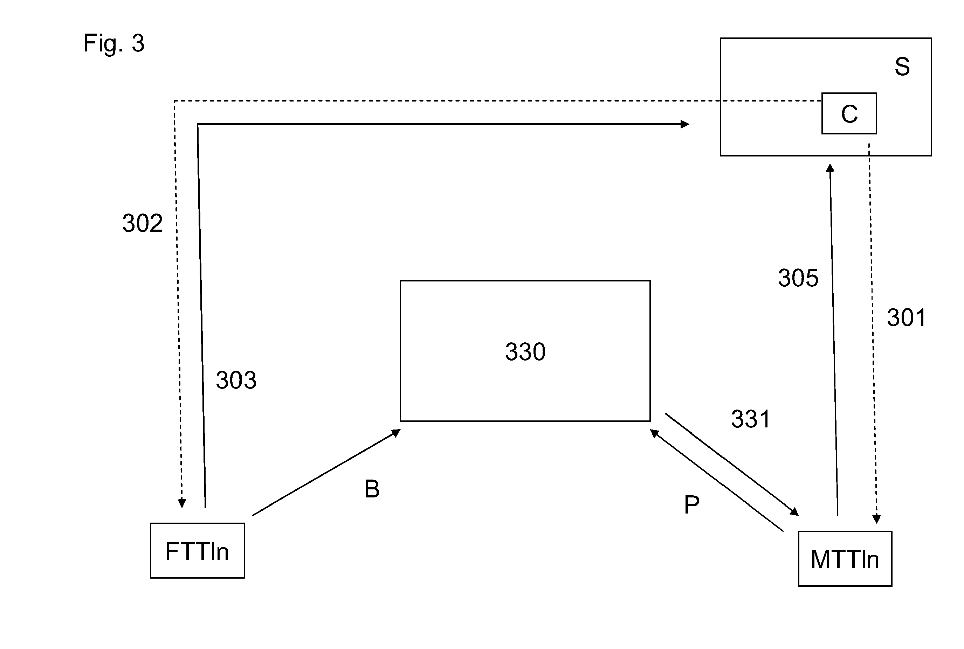

**Fig.3** zeigt eine Bereitstellung einer Markierungsinformation B und eine Anforderung P einer Markierung in einem Multimediainhalt C. Einem ersten Endgerät FTTln einer Festnetzfernsehlösung, beispielsweise einer Set Top Box, wird ein Multimediainhalt C, beispielsweise ein auf Anforderung verfügbarer Spielfilm, bereitgestellt von einem Server S. Dies ist durch eine Kommunikationsbeziehung 302 dargestellt. Ein Nutzer des ersten Endgeräts FTTln beendet die Bereitstellung beispielsweise dadurch motiviert, dass er einer terminlichen Verpflichtung außer Haus nachkommen muss. Aufgrund des Abbruchs der Bereitstellung des Multimediainhalts C informiert das erste Endgerät FTTln den Server S mittels einer Nachricht 303. Daraufhin beendet der Server S die Bereitstellung des Multimediainhalts C für das erste Endgerät. Ebenfalls sendet das erste Endgerät FTTln die Markierungsinformation B einem Markierungsserver 330. Die Markierungsinformation B wird hierbei in Form einer Nachricht von dem ersten Endgerät FTTln an den Markierungsserver 330 übertragen. Der Markierungsserver 330 speichert die Markierungsinformation B lokal. Die Speicherung der Markierungsinformation B erfolgt vorzugsweise redundant aus Gründen der Ausfallsicherheit. Die Markierungsinformation B enthält beispielsweise eine einzige Markierung in dem Multimediainhalt C. Der Multimediainhalt C steht in einer für ein zweites Endgerät MTTln ungeeigneten Kodierung auf einem Server S bereit. Jedoch kann der Server S eine dynamische Umkodierung in eine für das zweite Endgerät MTTln geeignete Kodierung leisten. Das zweite Endgerät MTTln ist beispielsweise ein mobiles Endgerät, welches Zugriff hat auf ein Mobilfunkfernsehen. Nachdem die Markierungsinformation B auf dem Markierungsserver 330 hinterlegt ist, generiert das zweite Endgerät MTTln eine Anforderung P zur Bereitstellung der einzigen Markierung in dem Multimediainhalt. Die Anforderung P wird als Nachricht an den Markierungsserver 330 übertragen. Aufgrund der Anforderung P stellt der Markierungsserver dem zweiten Endgerät MTTln die einzige Markierung in dem Multimediainhalt zur Verfügung. Dies geschieht in Form einer Nachricht 331. Das zweite Endgerät MTTln ermittelt daraufhin eine Übertragungsinformation. Ggf. aus einer Mehrzahl von zur Verfügung stehenden Video On Demand Servern wählt das zweite Endgerät MTTln den Server S aus, welcher den Multimediainhalt C in der für das zweite Endgerät MTTln geeigneten Kodierung für die Mobilfunkfernsehlösung bereitstellen kann. Zusätzlich können geographische Abhängigkeiten, Lastzustände des Mobilfunknetzes oder der Video On Demand Server in die Auswahlentscheidung des zweiten Endgeräts MTTln einbezogen werden. Ist die Übertragungsinformation vollständig ermittelt, dann sendet das zweite Endgerät MTTln dem Server S eine Nachricht 305, gemäß der von dem Server S die Bereitstellung des Multimediainhalts C ab der einzigen Markierung verlangt wird für das zweite Endgerät MTTln. Die Nachricht kann beispielsweise die einzige Markierung in dem Multimediainhalt enthalten, eine Identifikation des Multimediainhalts C, eine Kodierung und Einstellparameter für einen Encoder, Übertragungsparameter und/oder eine Adresse des zweiten Endgeräts MTTln. Nach Erhalt der Nachricht 305 beginnt der Server S mit der Bereitstellung des Multimediainhalts C für das zweite Endgerät MTTln ab der einzigen Markierung. Da der Server S die für das zweite Endgerät geeignete Kodierung nicht im Speicher hinterlegt hat, nutzt der Server S beispielsweise eine lokale Umkodierungsfunktion zur Generierung der für das zweite Endgerät geeigneten Kodierung. Die Bereitstellung des Multimediainhalts C ab der einzigen Markierung für das zweite Endgerät MTTln kann beispielsweise im Unicast Verfahren und mittels Streaming erfolgen. Die Bereitstellung des Multimediainhalts C ab der zumindest einen Markierung ist durch eine Kommunikationsbeziehung 301 dargestellt.

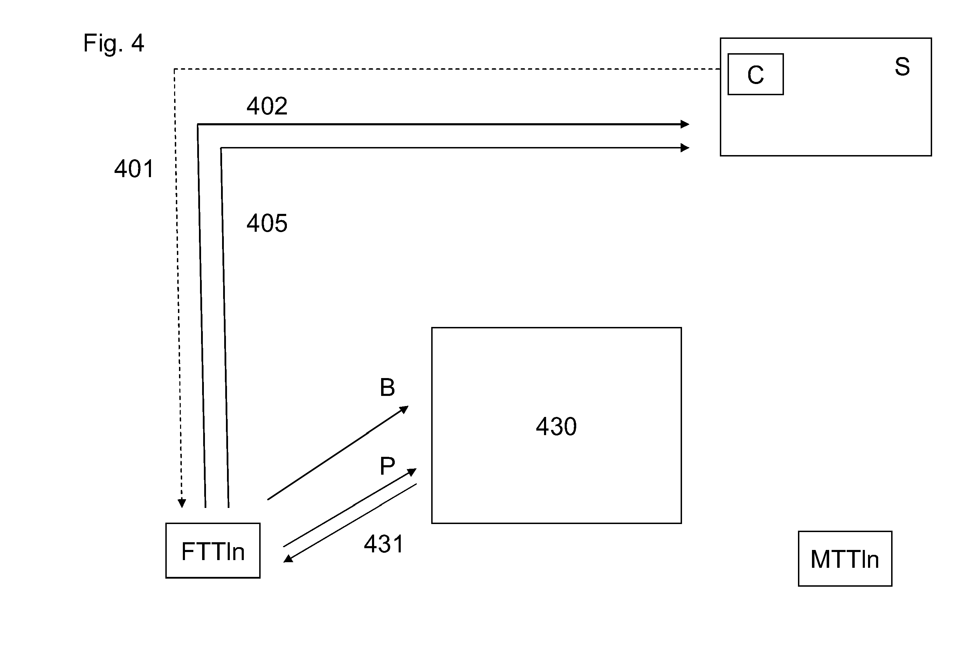

**Fig.4** zeigt eine Bereitstellung einer Markierungsinformation B und eine Anforderung P einer Markierung durch ein erstes Endgerät FTTln. Dem ersten Endgerät FTTln einer Festnetzfernsehlösung, beispielsweise einer Set Top Box, wird ein Multimediainhalt C, beispielsweise ein auf Anforderung verfügbarer Spielfilm, bereitgestellt von einem Server S. Dies ist durch eine Kommunikationsbeziehung 401 dargestellt. Ein Nutzer des ersten Endgeräts FTTln unterbricht die Bereitstellung beispielsweise dadurch motiviert, dass ein Anruf eintrifft. Aufgrund der Unterbrechung der Bereitstellung des Multimediainhalts C informiert das erste Endgerät FTTln den Server S mittels einer Nachricht 402. Daraufhin beendet der Server S die Bereitstellung des Multimediainhalts C für das erste Endgerät FTTln. Ebenfalls sendet das erste Endgerät FTTln eine Markierungsinformation B einem Markierungsserver 430. Die Markierungsinformation B wird hierbei in Form einer Nachricht von dem ersten Endgerät FTTln an den Markierungsserver 430 übertragen. Der Markierungsserver 430 speichert die Markierungsinformation B lokal. Die Speicherung der Markierungsinformation B erfolgt vorzugsweise redundant aus Gründen der Ausfallsicherheit. Die Markierungsinformation B enthält beispielsweise eine einzige Markierung in dem Multimediainhalt C. Nachdem die Markierungsinformation B auf dem Markierungsserver 430 hinterlegt ist, generiert das erste Endgerät FTTln eine Anforderung P zur Bereitstellung der zumindest einen Markierung. Die Anforderung P wird als Nachricht an den Markierungsserver 430 übertragen. Aufgrund der Anforderung P stellt der Markierungsserver dem ersten Endgerät FTTln die zumindest eine Markierung zur Verfügung. Dies geschieht in Form einer Nachricht 431. Das erste Endgerät FTTln ermittelt daraufhin eine Übertragungsinformation. Ggf. aus einer Mehrzahl von zur Verfügung stehenden Video On Demand Servern wählt das erste Endgerät FTTln den Server S aus, welcher den Multimediainhalt C in einer für das erste Endgerät FTTln geeigneten Kodierung der Festnetzfernsehlösung bereitstellen kann. Zusätzlich können geographische Abhängigkeiten, Lastzustände des Festnetzes oder der Video On Demand Server in die Auswahlentscheidung des ersten Endgeräts FTTln einbezogen werden. Ist die Übertragungsinformation vollständig ermittelt, dann sendet das erste Endgerät FTTln dem Server S eine Nachricht 405, gemäß der von dem Server S die Bereitstellung des Multimediainhalts C ab der zumindest einen Markierung verlangt wird für das erste Endgerät FTTln. Die Nachricht kann beispielsweise die zumindest eine Markierung enthalten, eine Identifikation des Multimediainhalts C, eine Kodierung und Einstellparameter für einen Encoder, Übertragungsparameter und/oder eine Adresse des ersten Endgeräts FTTln. Nach Erhalt der Nachricht 405 beginnt der Server S mit der Bereitstellung des Multimediainhalts C ab der zumindest einen Markierung für das erste Endgerät FTTln. Die Bereitstellung des Multimediainhalts C ab der zumindest einen Markierung für das erste Endgerät FTTln kann beispielsweise im Unicast Verfahren und mittels Streaming erfolgen. Die Bereitstellung des Multimediainhalts C ab der zumindest einen Markierung ist durch die Kommunikationsbeziehung 401 dargestellt.

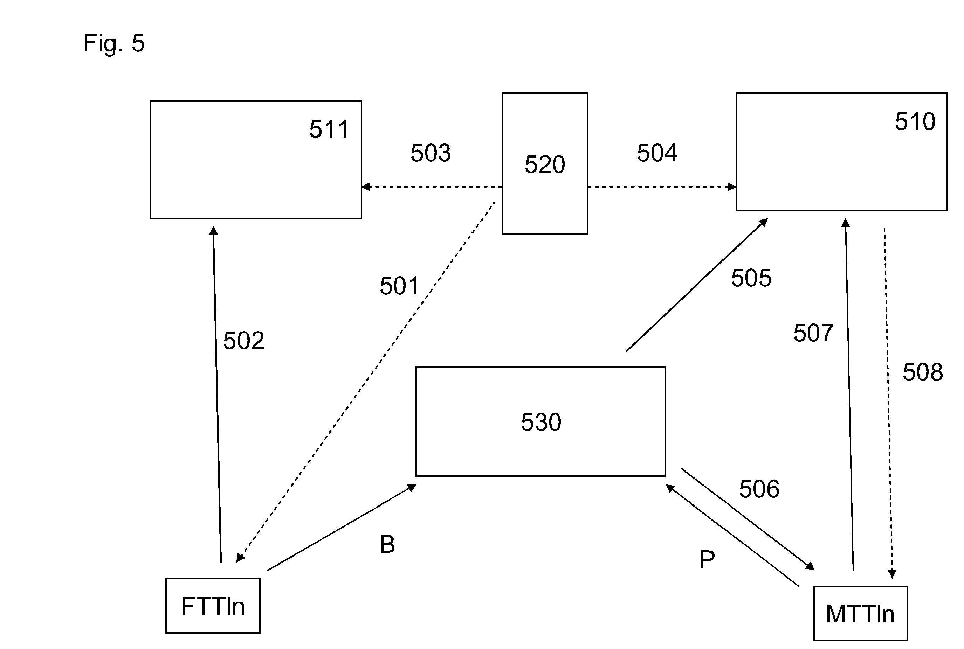

**Fig.5** zeigt eine Bereitstellung einer Markierungsinformation B für ein Fernsehprogramm durch ein erstes Endgerät FTTln und eine Anforderung P des Fernsehprogramms gemäß der Markierungsinformation B durch ein zweites Endgerät MTTln. Dem ersten Endgerät FTTln einer Festnetzfernsehlösung, beispielsweise einer Set Top Box, wird ein Multimediainhalt, beispielsweise eine Fernsehsendung eines Fernsehkanals, bereitgestellt von einem TV Headend Server 520. Dies ist durch eine Kommunikationsbeziehung 501 dargestellt. Ein Nutzer des ersten Endgeräts FTTln beendet die Bereitstellung beispielsweise dadurch motiviert, dass er einer terminlichen Verpflichtung außer Haus nachkommen muss. Aufgrund des Abbruchs der Bereitstellung des Multimediainhalts sendet das erste Endgerät FTTln eine Markierungsinformation B einem Markierungsserver 530. Die Markierungsinformation B wird hierbei in Form einer Nachricht von dem ersten Endgerät FTTln and den Markierungsserver 530 übertragen. Der Markierungsserver 530 speichert die Markierungsinformation B lokal. Die Speicherung der Markierungsinformation B erfolgt vorzugsweise redundant aus Gründen der Ausfallsicherheit. Die Markierungsinformation B enthält beispielsweise eine einzige Markierung in dem Multimediainhalt. Mit dem Abbruch der Bereitstellung des Multimediainhalts sendet das erste Endgerät FTTln eine Nachricht 502 an einen ersten PVR Server 511, gemäß der der erste PVR Server 511 veranlasst wird, den Multimediainhalt ab der einzigen Markierung in einer für das erste Endgerät FTTln geeigneten Kodierung aufzuzeichnen. Aufgrund der Nachricht 502 schaltet sich der erste PVR Server 511 auf das Fernsehprogramm auf, welches von dem TV Headend Server 520 in der für das erste Endgerät FTTln geeigneten Kodierung bereitgestellt wird, und zeichnet den Multimediainhalt in Form der Fernsehsendung ab der einzigen Markierung auf. Die Übertragung des Multimediainhalts von dem TV Headend Server 520 zu dem ersten PVR Server 511 ist durch eine Kommunikationsbeziehung 503 dargestellt. Mit Erhalt der Markierungsinformation B sendet der Markierungsserver 530 eine Nachricht 505 an einen zweiten PVR Server 510, gemäß der der zweite PVR Server 510 veranlasst wird, den Multimediainhalt ab der einzigen Markierung in einer für das zweite Endgerät MTTln geeigneten Kodierung aufzuzeichnen. Aufgrund der Nachricht 505 schaltet sich der zweite PVR Server 510 auf das Fernsehprogramm auf, welches von dem TV Headend Server 520 in der für das zweite Endgerät MTTln geeigneten Kodierung bereitgestellt wird, und zeichnet den Multimediainhalt in Form der Fernsehsendung ab der einzigen Markierung auf. Die Übertragung des Multimediainhalts von dem TV Headend Server 520 zu dem zweiten PVR Server 510 ist durch eine Kommunikationsbeziehung 504 dargestellt. Das zweite Endgerät MTTln ist beispielsweise ein mobiles Endgerät, welches Zugriff hat auf ein Mobilfunkfernsehen. Nachdem die Markierungsinformation B auf dem Markierungsserver 530 hinterlegt ist, generiert das zweite Endgerät MTTln eine Anforderung P zur Bereitstellung der zumindest einen Markierung. Die Anforderung P wird als Nachricht an den Markierungsserver 530 übertragen. Aufgrund der Anforderung P stellt der Markierungsserver 530 dem zweiten Endgerät MTTln die einzige Markierung zur Verfügung. Dies geschieht in Form einer Nachricht 506. Die Nachricht 506 kann darüber hinaus eine Adressinformation des zweiten PVR Servers 510 umfassen. Das zweite Endgerät MTTln ermittelt daraufhin eine Übertragungsinformation. Ist die Übertragungsinformation vollständig ermittelt, dann sendet das zweite Endgerät MTTln dem zweiten PVR Server 510 eine Nachricht 507, gemäß der von dem zweiten PVR Server 510 die Bereitstellung des Multimediainhalts ab der einzigen Markierung verlangt wird für das zweite Endgerät MTTln. Die Nachricht kann beispielsweise die einzige Markierung enthalten, eine Identifikation des Multimediainhalts, eine Kodierung und Einstellparameter für einen Encoder, Übertragungsparameter und/oder eine Adresse des zweiten Endgeräts MTTln. Nach Erhalt der Nachricht 507 beginnt der zweite PVR Server 510 mit der Bereitstellung des Multimediainhalts C ab der einzigen Markierung für das zweite Endgerät MTTln. Die Bereitstellung des Multimediainhalts ab der einzigen Markierung für das zweite Endgerät MTTln kann beispielsweise im Unicast Verfahren und mittels Streaming erfolgen. Die Bereitstellung des Multimediainhalts ab der einzigenMarkierung ist durch eine Kommunikationsbeziehung 508 dargestellt.

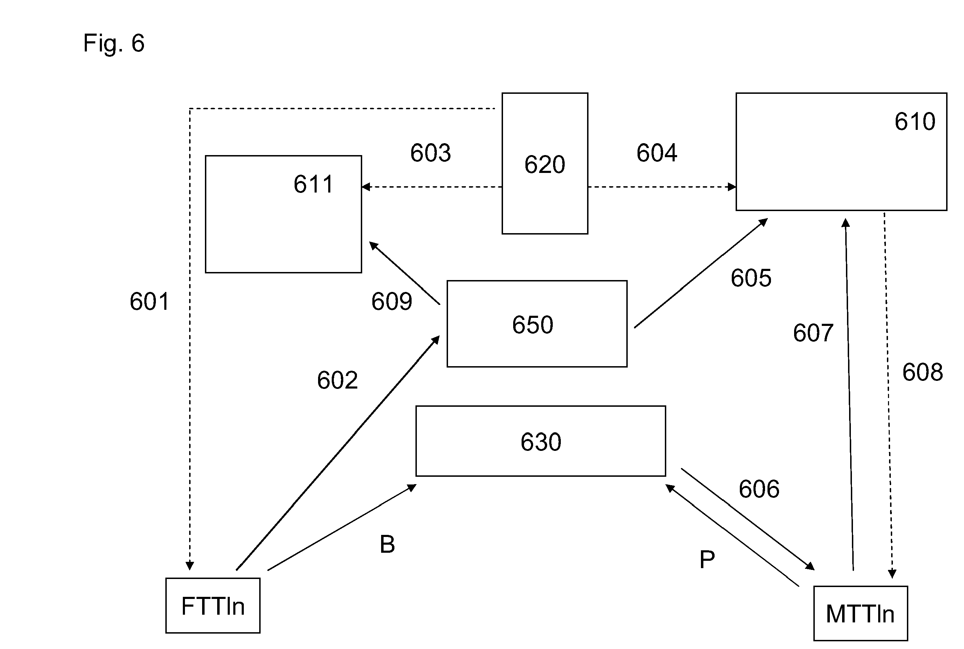

**Fig.6** zeigt eine Bereitstellung einer Markierungsinformation B für ein Fernsehprogramm durch ein erstes Endgerät FTTln, eine zentrale Steuerung 650 zweier PVR Server und eine Anforderung P des Fernsehprogramms gemäß der Markierungsinformation durch ein zweites Endgerät MTTln. Dem ersten Endgerät FTTln einer Festnetzfernsehlösung, beispielsweise einer Set Top Box, wird ein Multimediainhalt, beispielsweise eine Fernsehsendung eines Fernsehkanals, bereitgestellt von einem TV Headend Server 620. Dies ist durch eine Kommunikationsbeziehung 601 dargestellt. Ein Nutzer des ersten Endgeräts FTTln beendet die Bereitstellung beispielsweise dadurch motiviert, dass er einer terminlichen Verpflichtung außer Haus nachkommen muss. Aufgrund des Abbruchs der Bereitstellung des Multimediainhalts sendet das erste Endgerät FTTln eine Markierungsinformation B einem Markierungsserver 630. Die Markierungsinformation B wird hierbei in Form einer Nachricht von dem ersten Endgerät FTTln an den Markierungsserver 630 übertragen. Der Markierungsserver 630 speichert die Markierungsinformation B lokal. Die Speicherung der Markierungsinformation B erfolgt vorzugsweise redundant aus Gründen der Ausfallsicherheit. Die Markierungsinformation B enthält beispielsweise eine einzige Markierung in dem Multimediainhalt. Mit dem Abbruch der Bereitstellung des Multimediainhalts sendet das erste Endgerät FTTln eine Nachricht 602 an die zentrale Steuerung 650. Die zentrale Steuerung 650 prüft, ob bereits ein Auftrag zur Aufzeichnung des Fernsehprogramms in einer für das erste Endgerät FTTln geeigneten Kodierung erhalten wurde. Ist dies nicht der Fall, dann sendet die zentrale Steuerung 650 dem ersten PVR Server 611 eine Nachricht 609, gemäß der der erste PVR Server 611 veranlasst wird, den Multimediainhalt ab der einzigen Markierung in einer für das erste Endgerät FTTln geeigneten Kodierung aufzuzeichnen. Andernfalls vermerkt die zentrale Steuerung 650, dass eine Aufzeichnung des Multimediainhalts C ab der einzigen Markierung von dem ersten Endgerät FTTln verlangt wurde. Aufgrund der Nachricht 609 schaltet sich der erste PVR Server 611 auf das Fernsehprogramm auf, welches von dem TV Headend Server 620 in der für das erste Endgerät FTTln geeigneten Kodierung bereitgestellt wird, und zeichnet den Multimediainhalt in Form der Fernsehsendung ab der einzigen Markierung auf. Die Übertragung des Multimediainhalts von dem TV Headend Server 620 zu dem ersten PVR Server 611 ist durch eine Kommunikationsbeziehung 603 dargestellt. Die zentrale Steuerung 650 prüft mit Erhalt der Nachricht 602 ferner, ob bereits ein Auftrag zur Aufzeichnung des Fernsehprogramms in einer für das zweite Endgerät MTTln geeigneten Kodierung erhalten wurde. Ist dies nicht der Fall, dann sendet die zentrale Steuerung 650 einem zweiten PVR Server 610 eine Nachricht 605, gemäß der der zweite PVR Server 610 veranlasst wird, den Multimediainhalt ab der einzigen Markierung in einer für das zweite Endgerät MTTln geeigneten Kodierung aufzuzeichnen. Andernfalls vermerkt die zentrale Steuerung 650, dass eine Aufzeichnung des Multimediainhalts C ab der einzigen Markierung für das zweite Endgerät MTTln verlangt wurde. Aufgrund der Nachricht 605 schaltet sich der zweite PVR Server 610 auf das Fernsehprogramm auf, welches von dem TV Headend Server 620 in der für das zweite Endgerät MTTln geeigneten Kodierung bereitgestellt wird, und zeichnet den Multimediainhalt C in Form der Fernsehsendung ab der einzigen Markierung auf. Die Übertragung des Multimediainhalts C von dem TV Headend Server 620 zu dem zweiten PVR Server 610 ist durch eine Kommunikationsbeziehung 604 dargestellt. Das zweite Endgerät MTTln ist beispielsweise ein mobiles Endgerät, welches Zugriff hat auf ein Mobilfunkfernsehen. Nachdem die Markierungsinformation B auf dem Markierungsserver 630 hinterlegt ist, generiert das zweite Endgerät MTTln eine Anforderung P zur Bereitstellung der einzigen Markierung. Die Anforderung P wird als Nachricht an den Markierungsserver 630 übertragen. Aufgrund der Anforderung P stellt der Markierungsserver 630 dem zweiten Endgerät MTTln die einzige Markierung zur Verfügung. Dies geschieht in Form einer Nachricht 606. Eine Adressinformation des zweiten PVR Servers 610 kann in den Konfigurationsdaten des zweiten Endgeräts MTTln enthalten sein. Ebenso kann die Adressinformation des zweiten PVR Servers 610 beispielsweise durch Abfrage der zentralen Steuerung 650 durch das zweite Endgerät MTTln erfolgen. Das zweite Endgerät MTTln ermittelt daraufhin eine Übertragungsinformation. Ist die Übertragungsinformation vollständig ermittelt, dann sendet das zweite Endgerät MTTln dem zweiten PVR Server 610 eine Nachricht 607, gemäß der von dem zweiten PVR Server 610 die Bereitstellung des Multimediainhalts ab der einzigen Markierung verlangt wird für das zweite Endgerät MTTln. Die Nachricht kann beispielsweise die einzige Markierung enthalten, eine Identifikation des Multimediainhalts, eine Kodierung und Einstellparameter für einen Encoder, Übertragungsparameter und/oder eine Adresse des zweiten Endgeräts MTTln. Nach Erhalt der Nachricht 607 beginnt der zweite PVR Server 610 mit der Bereitstellung des Multimediainhalts ab der einzigen Markierung für das zweite Endgerät MTTln. Die Bereitstellung des Multimediainhalts ab der zumindest einen Markierung für das zweite Endgerät MTTln kann beispielsweise im Unicast Verfahren und mittels Streaming erfolgen. Die Bereitstellung des Multimediainhalts ab der zumindest einen Markierung ist durch eine Kommunikationsbeziehung 608 dargestellt.

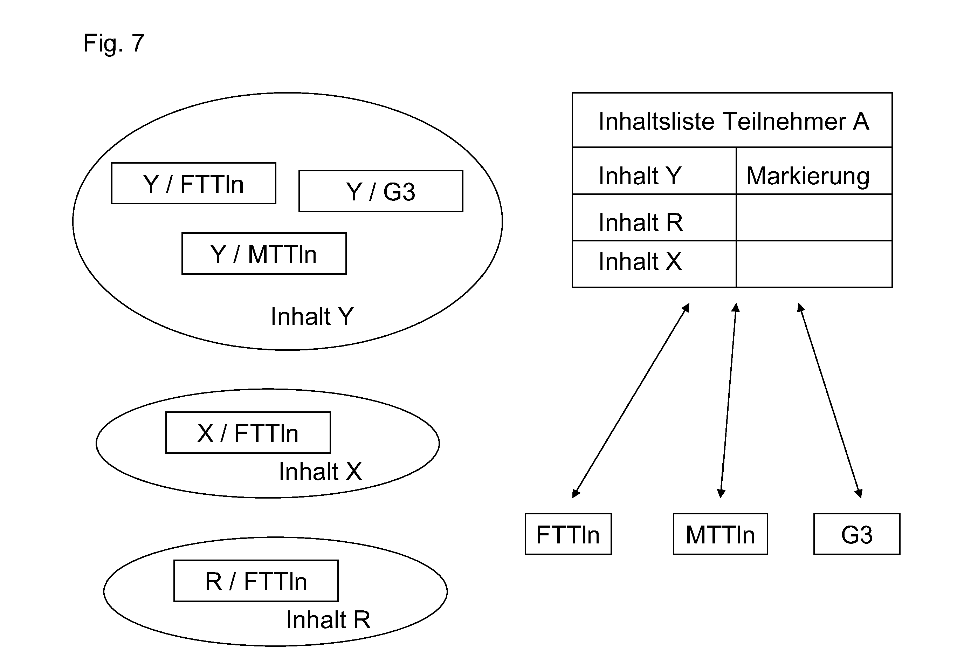

**Fig.7** zeigt eine Mehrzahl von Multimediainhalten eines Teilnehmers A. Der Teilnehmer A nutzt eine persönliche Inhaltsliste. Diese enthält beispielsweise eine Mehrzahl von Spielfilmen und/oder anderen Multimediainhalten, die der Teilnehmer erworben oder ausgeliehen hat. Der Teilnehmer nutzt ein erstes Endgerät FTTln einer Festnetzfernsehlösung, ein zweites Endgerät MTTln einer Mobilfunkfernsehlösung und ein weiteres Endgerät G3 einer weiteren Fernsehlösung. Ein Multimediainhalt X und ein Multimediainhalt R stehen nur in einer für das erste Endgerät FTTln geeigneten Version zur Verfügung. Ein Multimediainhalt Y ist jeweils in einer für jedes der Endgeräte des Teilnehmers geeigneten Version vorhanden. Für den Multimediainhalt Y ist eine globale Markierung vorhanden, welche in der persönlichen Inhaltsliste hinterlegt ist.

Im einfachsten Fall kann der Teilnehmer nur eine Markierung pro Multimediainhalt haben, welche zur Markierung eines Anhaltens oder eines Beendens einer Bereitstellung eines Multimediainhalts benutzt wird und zum Fortsetzen der Bereitstellung des Multimediainhalts herangezogen werden kann.

Ebenso kann es für einen Multimediainhalt eine Markierung pro Endgerät (z.B. TV, STB, Mobiltelefon), pro Lokation (z.B. Wohnzimmer, Kinderzimmer, Büro, Auto), pro Nutzer (z.B. Familienmitglied), pro weiterem Parameter (z.B. Wochentag) geben.

Insbesondere kann, sofern mehrere Markierungen für einen Multimediainhalt existieren, die Auswahl einer Markierung automatisch erfolgen. Wird beispielsweise eine Markierung M1 gesetzt während der Ausgabe eines Multimediainhalts in HDTV Qualität, so kann diese verschieden sein von einer Markierung M2 während der Ausgabe des Multimediainhalts in SDTV Qualität. Wird die Ausgabe in HDTV fortgesetzt, so kann beispielsweise automatisch auf die Markierung M1 zugegriffen werden zur Fortsetzung der Ausgabe in HDTV Qualität.

Markierungen können dem Teilnehmer oder einem Nutzer auf einer graphischen Benutzeroberfläche eines Endgeräts ausgegeben werden. Vorteilhaft kann die Übersichtlichkeit der Ausgabe gesteigert werden dadurch, dass parameterbasierte Inhaltslisten verwendet werden oder verschiedene Typen von Markierungen.

Auch kann der Teilnehmer oder Nutzer mehrere Markierungen pro Multimediainhalt haben. Ebenso können für einen Multimediainhalt mehrere parameterspezifische Markierungen vorhanden sein (HDTV1, HDTV2, Mobile1, SDTV1, Mobile2, Mobile3, TVSET, Kinderzimmer)

Markierungen können vorzugsweise endgerätespezifisch verwendet werden, so dass bei Fortsetzung der Ausgabe eines Multimediainhalts über ein Endgerät, die für dieses Endgerät existierende Markierung verwendet wird. Neben einem solchen Default kann dem Nutzer jedoch ebenso die Verwendung einer Markierung eines anderen Endgeräts zur Fortsetzung der Ausgabe des Multimediainhalts angeboten werden. Alternativ hierzu kann statt des Endgeräts auch ein anderer Parameter (Wohnzimmer, Kinderzimmer, Büro, Auto) zur Selektion einer Markierung Verwendung finden. Hierbei kann die Selektion automatisch oder durch den Teilnehmer oder Nutzer erfolgen. Ebenso kann der Teilnehmer oder der Nutzer eine Mehrzahl von Markierungen verwenden, um beispielsweise jeweils einen Beginn von interessanten Szenen in einem Spielfilm zu kennzeichnen. Unter Zugriff auf die Mehrzahl der Markierungen können diese Szenen später in einfacher Weise gesichtet werden. Diese szenenbasierten Markierungen können vorzugsweise identisch sein für alle Endgeräte FTTln, MTTln und G3 des Teilnehmers oder Nutzers, da sie jeweils mit einem Zeitwert verknüpft sind, welcher unabhängig sein kann von einer Ausgabe auf einem HDTV fähigen Endgerät, einem SDTV fähigen Endgerät oder einem mobilen Endgerät. Diese Markierungen sind jeweils geräteunabhängig und bezeichnen einen jeweils identischen Zeitpunkt in dem Spielfilm.

Ebenfalls kann ein Dienstanbieter, insbesondere ein Netzbetreiber, ein Inhalteanbieter, ein externer Dienstanbieter, ein öffentlicher Internet - Dienstanbieter, Markierungen vordefinieren für einen Multimediainhalt. So können beispielsweise für die spektakulärsten Stunt-Szenen bereits Markierungen vorhanden sein, welche der Dienstanbieter beispielsweise mit Hilfe eines ersten Endgeräts bereitgestellt hat. Der Dienstanbieter kann eine Mehrzahl von solchen Markierungen in einer weiteren Markierungsliste abspeichern und dem Teilnehmer oder Nutzer zur Verfügung stellen. Wenn der Teilnehmer oder Nutzer von solchen Markierungen Gebrauch machen möchte, kann der Teilnehmer oder Nutzer die weitere Markierungsliste in seine persönliche Markierungsliste kopieren, aufnehmen oder importieren. Somit können dem Teilnehmer oder Nutzer vordefinierte szenenbasierte Markierungen verfügbar werden, welche er nutzen, verändern und ergänzen kann.

Hat der Teilnehmer oder Nutzer beispielsweise eine szenenbasierte Markierung gespeichert, dann kann er die Markierung für einen weiteren Teilnehmer oder Nutzer zur Verfügung stellen oder exportieren. Dies kann beispielsweise mit Hilfe eines öffentlichen Internet-Dienstes oder eines Dienstes des Dienstanbieters erfolgen. Der weitere Teilnehmer oder Nutzer kann die szenenbasierte Markierung importieren. Ebenso kann dem weiteren Teilnehmer oder Nutzer angeboten werden, die szenenbasierte Markierung in seine persönliche Markierungsliste aufzunehmen, wenn der weitere Teilnehmer oder Nutzer den Spielfilm beispielsweise erwirbt, mietet oder das erste Mal ausleiht.

Bei Benutzung vordefinierter Markierungen des Dienstanbieters oder Markierungen des weiteren Teilnehmers kann die persönliche Markierungsliste des Teilnehmers oder Nutzers eine Mehrzahl von Markierungen aufweisen, welche reale Zeitwerte in dem Spielfilm sein können. Insbesondere können die vordefinierten Markierungen und/oder die Markierungen des weiteren Teilnehmers auch gerätespezifische Markierungen oder parameterbasierte Markierungen sein.

Zur einfachen Handhabung können der Dienstanbieter, der Teilnehmer oder Nutzer oder der weitere Teilnehmer oder Nutzer Markierungen mit einem Namen versehen. Beispielsweise können szenenbasierte Markierungen eines Fußballspiels mit "Anpfiff", zweite Halbzeit", "1:0" oder "Elfmeter" bezeichnet werden.

Ebenso können Markierungen voneinander abhängen, indem sie beispielsweise einen Anfang einer Szene und ein Ende dieser Szene bezeichnen (Start-Stop) oder indem sie beispielsweise einen Anfang, ein erstes Highlight und ein Ende einer Szene bezeichnen (Start-Highlight-Stop). So kann es Paare, Tripel oder n-Tupel von voneinander abhängigen oder von einander zugeordneten Markierungen in der persönlichen Markierungsliste des Teilnehmers oder Nutzers für einen Multimediainhalt geben. Will der Teilnehmer oder Nutzer beispielsweise nur die Höhepunkte eines Fußballspiels oder nur die lustigsten Szenen einer Komödie sehen, dann kann der Teilnehmer oder Nutzer von einer Markierungsliste Gebrauch machen, welche beispielsweise nur aus Start-Stop Markierungspaaren besteht. Bei Vorliegen einer solchen Markierungsliste kann der Teilnehmer oder Nutzer vorteilhaft lokalen Speicherplatz, Bandbreite und/oder Übertragungszeit einsparen, wenn er eine Anforderung des Multimediainhalts auf diese Liste und nicht nur auf eine Markierung in der Liste bezieht. Somit kann er bewirken, dass er nur die Folge der Highlights per Ladevorgang oder per Streaming bereitgestellt bekommt. Eine Speicherplatzersparnis ergibt sich hierbei nur, falls der Teilnehmer oder Nutzer den durch die Markierungsliste bestimmten Teil des Multimediainhalts lokal abspeichert, insbesondere mit einem Push VoD Verfahren, oder wenn er den per Streaming bereitgestellten Teil des Multimediainhalts lokal aufzeichnen möchte.

Neben Start - Stop Markierungspaaren, welche eine Anforderung eines bereits gespeicherten Multimediainhalts unter Auslassung nicht gewünschter Anteile ermöglichen, kann es weiterhin für einen Multimediainhalt jeweils Markierungen für den Anfang und das Ende des Multimediainhalts geben.

Ebenfalls können Markierungen eines Multimediainhalts mit Zugangskontrollinformationen versehen werden. So kann beispielsweise vordefiniert durch den Dienstanbieter oder durch Eltern gesetzt für einen ersten Zeitabschnitt eines Multimediainhalts eine Zugangskontrollinformation "Geeignet ab 6 Jahren" vorhanden sein. Ein anderer Zeitabschnitt, beispielsweise eine Gewaltszene, kann dagegen durch Markierungen bezeichnet sein, welche eine Zugangskontrollinformation "Geeignet ab 12 Jahren" aufweisen. Wird nun der Multimediainhalt angefordert von einem zweiten Endgerät, für welches eine Beschränkung auf Eignung ab 6 Jahren besteht, so wird bei der Ermittlung der Übertragungsinformation die Zugangskontrollinformation einbezogen. Damit wird eine Anforderung des gesamten Multimediainhalts unter Bezugnahme auf die Markierungsliste auf das Ausspielen der gemäß Zugangskontrollinformation zulässigen Abschnitte reduziert. Eine explizite Anforderung einer Bereitstellung des Multimediainhalts ab einer gemäß Zugangskontrollinformation unzulässigen Markierung kann verwehrt werden oder zum Fortsetzen des Multimediainhalts ab der nächsten gemäß Zugangskontrollinformation zulässigen Markierung führen.

Eine Ausgabe von Markierungen für einen Multimediainhalt kann vorteilhaft im Hinblick auf die Bedienung um einen Markierungstyp erweitert sein. Name, Zeitwert und Typ, insbesondere Start-Markierung, Ende-Markierung, Geräte-Markierung, Parameter-Markierung, Zulassungskontrollmarkierung können dem Teilnehmer oder Nutzer ausgegeben werden. Hierbei können horizontale oder vertikale Übersichten und/oder Listen mit der gesamten Markierungsinformation oder mit Teilen davon als Ausgaben zur Verfügung gestellt werden.

Ein Multimediainhalt kann durch einen Inhalteanbieter oder einen Inhalteverteiler, beispielsweise einen IPTV Anbieter, offline, d. h. in einem Vorverarbeitungsschritt, kodiert werden. Der Multimediainhalt kann hierbei von dem Inhaltebesitzer, beispielsweise einem Hollywood Studio, auf einem Magnetband in hoher Qualität zur Verfügung gestellt werden. Mittels eines Encoders kann der Multimediainhalt beispielsweise in eine der Kodierungen MPEG2, H.264, VC1 gebracht werden und optional verschlüsselt werden z. B. gemäß einem der Verfahren AES, CSA oder einem proprietären Verschlüsselungsverfahren.

Ebenso kann ein Teilnehmer oder Nutzer einen eigenen Multimediainhalt erzeugen, beispielsweise durch Aufnahme eines per Broadcast zur Verfügung gestellten Inhalts oder unter Benutzung geeigneter Aufnahmeeinrichtungen, beispielsweise einer Kamera und /oder eines Mikrofons.

Soll ein Multimediainhalt sowohl einer Festnetzfernsehlösung als auch einer Mobilfunkfernsehlösung zur Verfügung gestellt werden, kann es sein, dass der Multimediainhalt beispielsweise in HDTV und SDTV Qualität für Endgeräte der Festnetzfernsehlösung vorliegen muss und in H.263 Kodierung, H.264 Kodierung oder MPEG Kodierung mit geringer Auflösung für Endgeräte der Mobilfunkfernsehlösung. Es kann erforderlich sein, dass der Multimediainhalt in verschiedenen Versionen vorliegen muss, die sich hinsichtlich Format, Kodierverfahren, Auflösung oder Verschlüsselung unterscheiden können.

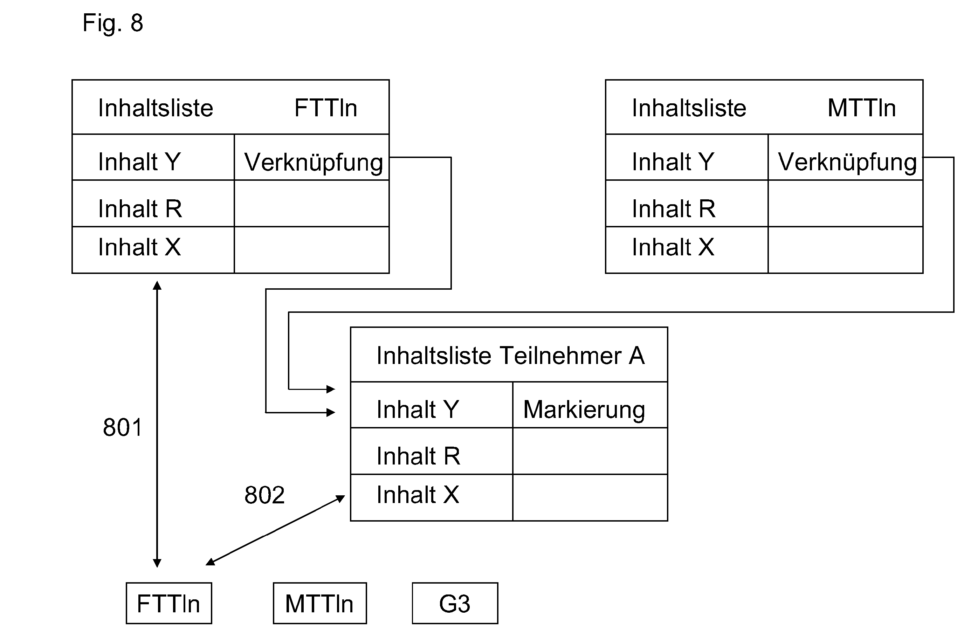

**Fig. 8** zeigt eine Speicherung einer Markierungsinformation eines Teilnehmers A. Der Teilnehmer A nutzt eine persönliche Inhaltsliste. Diese enthält beispielsweise eine Mehrzahl von Spielfilmen und / oder anderen Multimediainhalten. Der Teilnehmer nutzt ein erstes Endgerät FTTln einer Festnetzfernsehlösung, ein zweites Endgerät MTTln einer Mobilfunkfernsehlösung und ein weiteres Endgerät G3 einer weiteren Fernsehlösung. Für das erste und das zweite Endgerät gibt es jeweils eine gerätespezifische Inhaltsliste.

Das erste Endgerät FTTln hat Zugriff auf Multimediainhalte Y, R und X. Für den Multimediainhalt Y gibt es eine Markierung in der gerätespezifischen Inhaltsliste des ersten Endgeräts FTTln, für die Multimediainhalte R und X gibt es keine Markierungen. Da der Multimediainhalt Y auch von dem zweiten Endgerät MTTln zugegriffen werden kann, ist die Markierung in einer zentralen Inhaltsliste gespeichert. Die gerätespezifische Inhaltsliste des ersten Endgeräts FTTln weist eine Verknüpfung mit der oder einen Link auf die in der zentralen Inhaltsliste hinterlegte Markierung auf.

Das zweite Endgerät MTTln hat ebenfalls Zugriff auf die Multimediainhalte Y, R und X. Für den Multimediainhalt Y gibt es eine Markierung in der gerätespezifischen Inhaltsliste des zweiten Endgeräts MTTln, für die Multimediainhalte R und X gibt es keine Markierungen. Da der Multimediainhalt Y auch von dem ersten Endgerät FTTln zugegriffen werden kann, ist die Markierung in einer zentralen Inhaltsliste gespeichert. Die gerätespezifische Inhaltsliste des zweiten Endgeräts MTTln weist eine Verknüpfung oder einen Link auf die in der zentralen Inhaltsliste hinterlegte Markierung auf.

Die zentrale Inhaltsliste ist vorzugsweise an zentraler Stelle gespeichert. Sowohl das erste Endgerät FTTln als auch das zweite Endgerät MTTln haben Zugriff auf die zentrale Inhaltsliste. Gerätespezifische Inhaltslisten wie auch zentrale Inhaltslisten können im XML Format und/oder in einer Datenbasis hinterlegt sein.

Ein Abruf der aktuellen Markierungen, welche dem ersten Endgerät FTTln zur Verfügung stehen, erfolgt mittels eines Datenzugriffs 801 auf die gerätespezifische Inhaltsliste des ersten Endgeräts FTTln. Das erste Endgerät FTTln kann aufgrund der Abfrage seiner gerätespezifischen Inhaltsliste dem Teilnehmer oder Nutzer alle von dem ersten Endgerät aktuell verfügbaren Markierungen in den Multimediainhalten Y, R und X ausgeben. Für die Ausgabe der Markierung in dem Multimediainhalt Y ist zusätzlich der Zugriff auf die globale Inhaltsliste erforderlich gemäß einem lesenden Datenzugriff 802.

Soll über das erste Endgerät eine weitere Markierung in dem Multimediainhalt Y angelegt werden, so erfolgt dies allein durch einen Eintrag der weiteren Markierung in der zentralen Inhaltsliste gemäß einem schreibenden Datenzugriff 802.

Die für das erste Endgerät FTTln und/oder das zweite Endgerät MTTln verfügbaren Markierungen für den Multimediainhalt Y können in verschiedener Weise angefordert werden. So kann eine Auswahl beispielsweise aus einer Liste erfolgen, welche als Overlay oder im Vollbildmodus angezeigt wird. Ebenso kann eine Visualisierung vorhandener Markierungen auf einer Zeitachse oder in Form einer Uhr erfolgen, wobei die Zeitachse und die Uhr mit der zeitlichen Länge des Multimediainhalts Y verknüpft sind. Unter Umgehung der vorstehend aufgezeigten Alternativen kann ein direkter Sprung zu der nächsten oder zu der vorhergehenden Markierung unter Verwendung geeigneter Fernbedienungseingaben für das erste bzw. das zweite Endgerät FTTln, MTTln erfolgen.

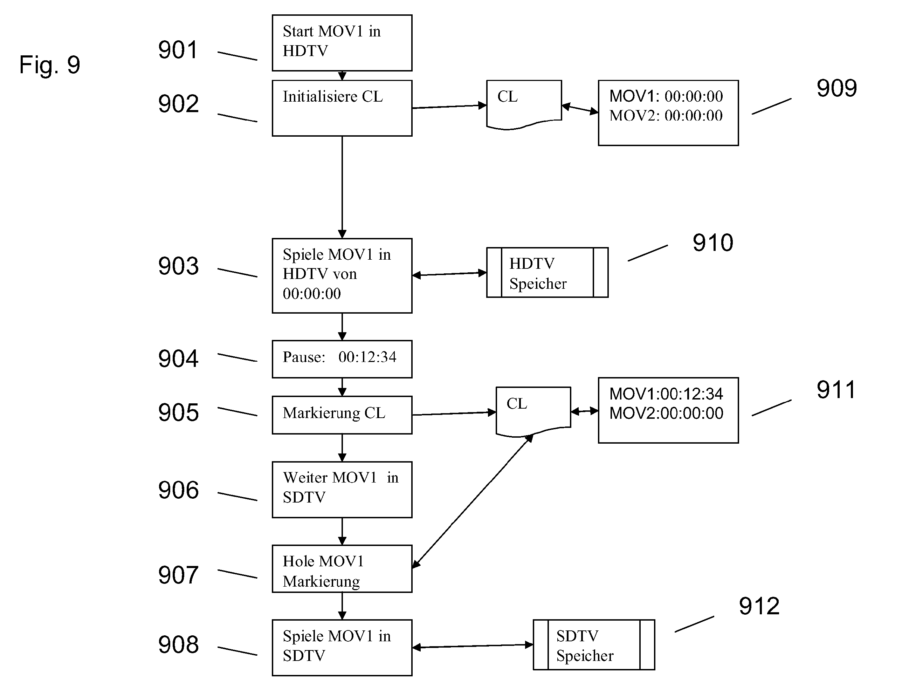

**Fig.9** zeigt eine Unterbrechung einer Bereitstellung eines Multimediainhalts MOV1 in HDTV Qualität und eine Fortsetzung der Bereitstellung des Multimediainhalts MOV1 in SDTV Qualität. Im Schritt 901 erfolgt ein erstmaliger Start des Multimediainhalts MOV1, welcher ein Spielfilm ist, in HDTV Qualität. Der Spielfilm MOV1 wird auf Anforderung bereitgestellt. Im Schritt 902 erfolgt eine Initialisierung einer Inhaltsliste CL. MOV1 wird in die Inhaltsliste CL mit der Markierung 0 Stunden, 0 Minuten, 0 Sekunden aufgenommen. Dies ist durch eine Tabelle 909 dargestellt. Mit Schritt 903 erfolgt eine Bereitstellung des Spielfilms MOV1 ab der Markierung 0 Stunden, 0 Minuten, 0 Sekunden. Die Bereitstellung erfolgt durch das Auslesen von einem Speicher 910, in welchem MOV1 in HDTV Kodierung hinterlegt ist. Gemäß Schritt 904 erfolgt eine Unterbrechung der Bereitstellung von MOV1 in HDTV Qualität zum Zeitpunkt 0 Stunden, 12 Minuten, 34 Sekunden. Dies kann beispielsweise durch einen Teilnehmer oder Nutzer über eine Pausentaste an einer Fernbedienung eines ersten Endgeräts verursacht sein. Im Schritt 905 erfolgt eine Speicherung der Unterbrechung als Markierung in der Inhaltsliste CL. Dies ist durch eine Tabelle 911 dargestellt. MOV1 wird in der Inhaltsliste CL mit der Markierung 0 Stunden, 12 Minuten, 34 Sekunden aktualisiert. Im Schritt 906 erfolgt eine Fortsetzung einer Bereitstellung von MOV1 in SDTV Qualität. Dies kann beispielsweise durch den Teilnehmer oder Nutzer über eine Fortsetzungstaste (Resume) an einer Fernbedienung eines zweiten Endgeräts verursacht sein. Gemäß Schritt 907 erfolgt ein lesender Zugriff auf die Markierung des Spielfilms MOV1 in der Inhaltsliste CL. Die Bereitstellung des Spielfilms MOV1 in SDTV Qualität ab der Markierung erfolgt gemäß Schritt 908 durch das Auslesen von einem Speicher 912, in welchem MOV1 in SDTV Kodierung hinterlegt ist.

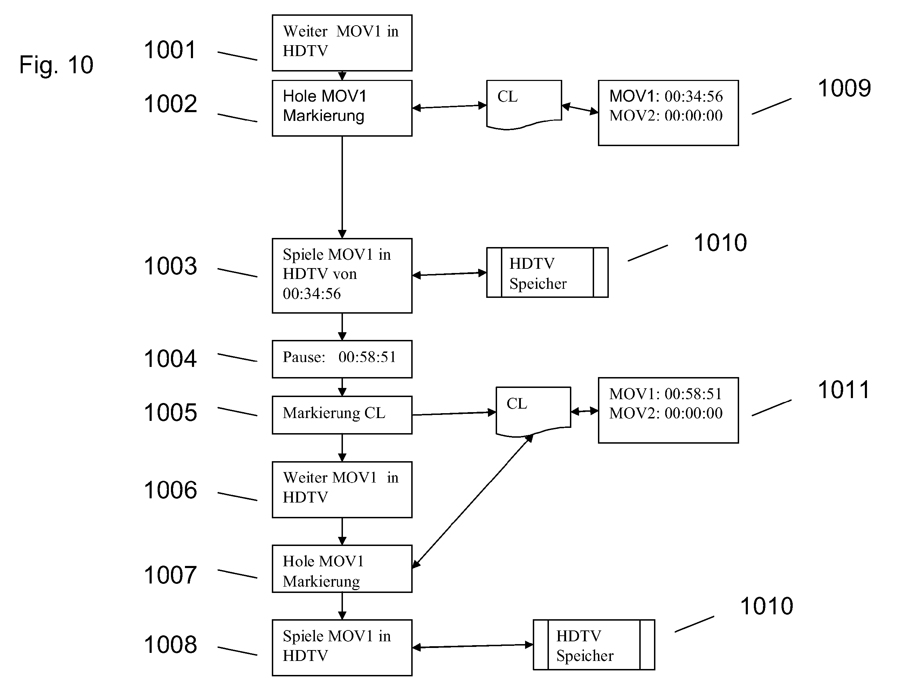

**Fig. 10** zeigt eine Fortsetzung einer Bereitstellung eines Multimediainhalts MOV1 in HDTV Qualität und eine darauffolgende weitere Fortsetzung der Bereitstellung des Multimediainhalts MOV1 in HDTV Qualität. Im Schritt 1001 erfolgt eine Fortsetzung der Bereitstellung des Multimediainhalts MOV1, welcher ein Spielfilm ist, in HDTV Qualität. Dies kann beispielsweise durch einen Teilnehmer oder Nutzer über eine Fortsetzungstaste (Resume) an einer Fernbedienung eines zweiten Endgeräts verursacht sein. Gemäß Schritt 1002 erfolgt ein lesender Zugriff auf eine Markierung des Spielfilms MOV1 in einer Inhaltsliste CL. Die Markierung wird ausgelesen mit 0 Stunden, 34 Minuten und 56 Sekunden. Die Markierung ist hinterlegt in einer Tabelle 1009, welche Teil der Inhaltsliste CL ist. Eine Bereitstellung des Spielfilms MOV1 in HDTV Qualität ab der Markierung erfolgt gemäß Schritt 1003 durch das Auslesen von einem Speicher 1010, in welchem MOV1 in HDTV Kodierung hinterlegt ist. Gemäß Schritt 1004 erfolgt eine Unterbrechung der Bereitstellung von MOV1 in HDTV Qualität zum Zeitpunkt 0 Stunden, 58 Minuten, 51 Sekunden. Dies kann beispielsweise durch den Teilnehmer oder Nutzer über eine Pausentaste an der Fernbedienung des zweiten Endgeräts verursacht sein. Im Schritt 1005 erfolgt eine Speicherung der Unterbrechung als Markierung in der Inhaltsliste CL. Die Markierung des Spielfilms MOV1 wird in der Inhaltsliste CL mit der Markierung 0 Stunden, 58 Minuten, 51 Sekunden aktualisiert. Dies ist durch eine Tabelle 1011 dargestellt. Im Schritt 1006 erfolgt eine Fortsetzung der Bereitstellung von MOV1 in HDTV Qualität. Dies kann beispielsweise durch den Teilnehmer oder Nutzer über die Fortsetzungstaste (Resume) an der Fernbedienung des zweiten Endgeräts verursacht sein. Gemäß Schritt 1007 erfolgt ein lesender Zugriff auf die Markierung des Spielfilms MOV1 in der Inhaltsliste CL. Eine Bereitstellung des Spielfilms MOV1 in HDTV Qualität ab der Markierung erfolgt gemäß Schritt 1008 durch das Auslesen von dem Speicher 1010, in welchem MOV1 in HDTV Kodierung hinterlegt ist.

### Abkürzungsliste

- AAC: Advanced Audio Coding
- AES: Advanced Encryption Standard
- AMR: Adaptive Multirate
- AVS: Audio Video Standard
- CSA: Common Scrambling Algorithm
- DSL: Digital Subscriber Line
- DTV: Digital Television
- DVB: Digital Video Broadcasting
- DVB-H: Digital Video Broadcasting- Handhelds
- EPG: Electronic Program Guide
- GW: Gateway
- HDTV: High Definition Television
- HTTP: Hypertext Transfer Protocol
- IP: Internet Protocol
- IPTV: Internet Protocol Television
- MAC: Media Access Control
- MBMS: Multimedia Broadcast Multicast Service
- MLP: Meridian Lossless Packing
- MMS: Multimedia Messaging Service
- MP2: MPEG-1 Audio Layer 2
- MP3: MPEG-1 Audio Layer 2,
- MPEG: Moving Picture Experts Group
- MPEG-AVC: MPEG Advanced Video Coding
- MPEG-SVC: MPEG Scalable Video Coding
- PC: Personal Computer
- PVR: Personal Video Recorder
- SDTV: Standard Definition Television
- SMS: Short Messaging Service
- STB: Set Top Box
- TV: Television, Fernsehen, Fernsehgerät
- UMTS: Universal Mobile Telecommunications System
- VC: Video Codec
- VoD: Video on Demand
- WMA: Windows Media Audio
- XML: Extensible Markup Language

## Patentansprüche

1. Verfahren zum geräteunabhängigen Zugriff auf Multimediainhalte,
- bei dem eine Markierungsinformation (B) von einem ersten Endgerät (FTTln) bereitgestellt wird,
wobei die Markierungsinformation (B) zumindest eine Markierung in einem Multimediainhalt (C) umfasst,
- bei dem die Markierungsinformation (B) gespeichert wird,
- bei dem eine Anforderung (P) zum Zugriff auf den Multimediainhalt (C) bereitgestellt wird,
- bei dem eine Übertragungsinformation in Abhängigkeit von der Anforderung (P) ermittelt wird zur Übertragung des Multimediainhalts (C) ab der zumindest einen Markierung an ein zweites Endgerät (MTTln), wobei die Übertragungsinformation eine zweite Kodierung für ein zweites Endgerät (MTTln) umfasst, welche verschieden ist von einer ersten Kodierung für das erste Endgerät (FTTln),
- bei dem die Markierungsinformation (B) bereitgestellt wird zumindest für das zweite Endgerät (MTTln), wobei die Markierungsinformation (B) bereitgestellt wird aufgrund einer ersten Bedienereingabe an dem ersten Endgerät (FTTln) zum Setzen einer Markierung in dem Multimediainhalt (C) und wobei die zumindest eine Markierung des Multimediainhalts (C) mit Zugangskontrollinformation versehen wird.

2. Verfahren nach Anspruch 1,
wobei die Anforderung (P) die zumindest eine Markierung in dem Multimediainhalt (C) betrifft oder wobei die Anforderung (P) den Multimediainhalt (C) ab der zumindest einen Markierung betrifft.

3. Verfahren nach einem der vorhergehenden Ansprüche, wobei die Übertragungsinformation und die zumindest eine Markierung einem Server (S) zur Bereitstellung des Multimediainhalts (C) ab der zumindest einen Markierung und gemäß der zweiten Kodierung zur Verfügung gestellt werden.

4. Verfahren nach einem der vorhergehenden Ansprüche,
- bei dem die zumindest eine Markierung einem ersten PVR Server zur Verfügung gestellt wird zur Aufzeichnung des Multimediainhalts (C) ab der zumindest einen Markierung in der ersten Kodierung.

5. Verfahren nach Anspruch 3,
- wobei der Server (S) ein VoD Server und/oder ein zweiter PVR Server ist.

6. Verfahren nach Anspruch 5,
- bei dem die zumindest eine Markierung dem zweiten PVR Server zur Verfügung gestellt wird zur Aufzeichnung des Multimediainhalts (C) ab der zumindest einen Markierung in der zweiten Kodierung.

7. Verfahren nach einem der vorhergehenden Ansprüche,
- bei dem die Anforderung (P) von dem ersten Endgerät (FTTln) oder von dem zweiten Endgerät (MTTln) bereitgestellt wird.

8. Verfahren nach einem der vorhergehenden Ansprüche, wobei die Anforderung (P) bereitgestellt wird aufgrund einer zweiten Bedienereingabe an dem ersten Endgerät (FTTln) zum Starten oder Fortsetzen des Multimediainhalts (C) oder aufgrund einer dritten Bedienereingabe an dem zweiten Endgerät (MTTln) zum Starten oder Fortsetzen des Multimediainhalts (C).

9. Verfahren nach einem der vorhergehenden Ansprüche,
- bei dem das erste Endgerät (FTTln) und das zweite Endgerät (MTTln) einander zugeordnet werden.

10. Verfahren nach einem der vorhergehenden Ansprüche, wobei die zumindest eine Markierung einen Zeitwert umfasst.

11. Verfahren nach einem der vorhergehenden Ansprüche, wobei die Markierungsinformation (B) mehrere explizit erzeugte Markierungen in dem Multimediainhalt umfasst.

12. Verfahren nach einem der vorhergehenden Ansprüche, wobei die Markierungsinformation (B) Markierungen für eine Mehrzahl von Multimediainhalten umfasst.

13. Verfahren nach einem der vorhergehenden Ansprüche, wobei bei Anforderung des Multimediainhalts (C) von dem zweiten Endgerät (MTTln) die Zugangskontrollinformation bei der Ermittlung der Übertragungsinformation einbezogen wird.

14. Vorrichtung zum geräteunabhängigen Zugriff auf Multimediainhalte umfassend eine Prozessoreinheit und/oder eine zumindest teilweise fest verdrahtete Schaltungsanordnung, die derart eingerichtet ist, dass das Verfahren nach einem der vorhergehenden Ansprüchen durchführbar ist.

15. System, insbesondere Kommunikationssystem, umfassend die Vorrichtung gemäß Anspruch 14.

## Claims

1. Method for device-independent access to multimedia contents,
- in which a marker information item (B) is provided by a first terminal (FTTln),
wherein the marker information (B) comprises at least one marker in a multimedia content (C),
- in which the marker information (B) is stored,
- in which a request (P) for access to the multimedia content (C) is provided,
- in which a transmission information item is ascertained on the basis of the request (P) for the purpose of transmitting the multimedia content (C) starting from the at least one marker to a second terminal (MTTln), wherein the transmission information comprises a second coding for the second terminal (MTTln) which is different than a first coding for the first terminal (FTTln),
- in which the marker information (B) is provided at least for the second terminal (MTTln), wherein the marker information (B) is provided on the basis of a first user input on the first terminal (FTTln) for the purpose of setting a marker in the multimedia content (C) and wherein the at least one marker in the multimedia content (C) is provided with access control information.

2. Method according to Claim 1,
wherein the request (P) relates to the at least one marker in the multimedia content (C) or wherein the request (P) relates to the multimedia content (C) starting from the at least one marker.

3. Method according to one of the preceding claims,
wherein the transmission information and the at least one marker are made available to a server (S) for providing the multimedia content (C) starting from the at least one marker and on the basis of the second coding.

4. Method according to one of the preceding claims,
- in which the at least one marker is made available to a first PVR server for the purpose of recording the multimedia content (C) starting from the at least one marker in the first coding.

5. Method according to Claim 3,
- wherein the server (S) is a VoD server and/or a second PVR server.

6. The method according to Claim 5,
- in which the at least one marker is made available to the second PVR server for the purpose of recording the multimedia content (C) starting from the at least one marker in the second coding.

7. Method according to one of the preceding claims,
- in which the request (P) is provided by the first terminal (FTTln) or by the second terminal (MTTln).

8. Method according to one of the preceding claims,
wherein the request (P) is provided on the basis of a second user input on the first terminal (FTTln) for the purpose of starting or continuing the multimedia content (C) or on the basis of a third user input on the second terminal (MTTln) for the purpose of starting or continuing the multimedia content (C).

9. Method according to one of the preceding claims,
- in which the first terminal (FTTln) and the second terminal (MTTln) are associated with one another.

10. Method according to one of the preceding claims,
wherein the at least one marker comprises a time value.

11. Method according to one of the preceding claims, wherein the marker information (B) comprises a plurality of explicitly produced markers in the multimedia content.

12. Method according to one of the preceding claims, wherein the marker information (B) comprises markers for a plurality of multimedia contents.

13. Method according to one of the preceding claims, wherein, if the multimedia content (C) is requested by the second terminal (MTTln), the access control information is factored in when ascertaining the transmission information.

14. Apparatus for device-independent access to multimedia contents comprising a processor unit and/or an at least partially hardwired circuit arrangement which is set up such that the method according to one of the preceding claims can be carried out.

15. System, particularly a communications system, comprising the apparatus according to Claim 14.

## Revendications

1. Procédé destiné à l'accès indépendant des appareils à des contenus multimédias,
- dans lequel une information de marquage (B) est préparée par un premier terminal (FTTln), dans lequel l'information de marquage (B) comprend au moins un marquage dans un contenu multimédia (C),
- dans lequel on mémorise l'information de marquage (B),
- dans lequel on prépare une demande (P) d'accès au contenu multimédia (C),
- dans lequel on détermine une information de transmission en fonction de la demande (P) en vue de la transmission du contenu multimédia (C) à partir dudit au moins un marquage à un deuxième terminal (MTTln), dans lequel l'information de transmission comprend un deuxième codage pour un deuxième terminal (MTTln), qui est différent d'un premier codage pour le premier terminal (FTTln),
- dans lequel on prépare l'information de marquage (B) au moins pour le deuxième terminal (MTTln), dans lequel on prépare l'information de marquage (B) sur la base d'une première entrée de l'utilisateur au premier terminal (FTTln) pour placer un marquage dans le contenu multimédia (C) et dans lequel on dote ledit au moins un marquage du contenu multimédia (C) d'une information de contrôle d'accès.

2. Procédé selon la revendication 1, dans lequel la demande (P) concerne ledit au moins un marquage dans le contenu multimédia (C) ou dans lequel la demande (P) concerne le contenu multimédia (C) à partir dudit au moins un marquage.

3. Procédé selon l'une quelconque des revendications précédentes, dans lequel on met l'information de transmission et ledit au moins un marquage à la disposition d'un serveur (S) en vue de la préparation du contenu multimédia (C) à partir dudit au moins un marquage et selon le deuxième codage.

4. Procédé selon l'une quelconque des revendications précédentes,
- dans lequel on met ledit au moins un marquage à la disposition d'un premier serveur PVR en vue de l'enregistrement du contenu multimédia (C) à partir dudit au moins un marquage dans le premier codage.

5. Procédé selon la revendication 3,
- dans lequel le serveur (S) est un serveur VoD et/ou un deuxième serveur PVR.

6. Procédé selon la revendication 5,
- dans lequel on met ledit au moins un marquage à la disposition du deuxième serveur PVR en vue de l'enregistrement du contenu multimédia (C) à partir dudit au moins un marquage dans le deuxième codage.

7. Procédé selon l'une quelconque des revendications précédentes,
- dans lequel la demande (P) est préparée par le premier terminal (FTTln) ou par le deuxième terminal (MTTln).

8. Procédé selon l'une quelconque des revendications précédentes, dans lequel on prépare la demande (P) sur la base d'une deuxième entrée de l'utilisateur au premier terminal (FTTln) en vue de démarrer ou de continuer le contenu multimédia (C) ou sur la base d'une troisième entrée de l'utilisateur au deuxième terminal (MTTln) en vue de démarrer ou de continuer le contenu multimédia (C).

9. Procédé selon l'une quelconque des revendications précédentes,
- dans lequel le premier terminal (FTTln) et le deuxième terminal (MTTln) sont associés l'un à l'autre.

10. Procédé selon l'une quelconque des revendications précédentes, dans lequel ledit au moins un marquage comprend une valeur de temps.

11. Procédé selon l'une quelconque des revendications précédentes, dans lequel l'information de marquage (B) comprend plusieurs marquages explicitement produits dans le contenu multimédia.

12. Procédé selon l'une quelconque des revendications précédentes, dans lequel l'information de marquage (B) comprend des marquages pour une multiplicité de contenus multimédias.

13. Procédé selon l'une quelconque des revendications précédentes, dans lequel, en cas de demande du contenu multimédia (C) émanant du deuxième terminal (MTTln), on tient compte de l'information de contrôle d'accès lors de la détermination de l'information de transmission.

14. Dispositif destiné à l'accès indépendant des appareils à des contenus multimédias, comprenant une unité de processeur et/ou un circuit câblé de façon au moins partiellement fixe, qui est conçu de telle manière que le procédé selon l'une quelconque des revendications précédentes puisse être exécuté.

15. Système, en particulier système de communication, comprenant le dispositif selon la revendication 14.
